(19) Europäisches Patentamt
European Patent Office
Office européen des brevets

(11) EP 2 152 768 B1

(12) **EUROPEAN PATENT SPECIFICATION**

(45) Date of publication and mention of the grant of the patent:
**25.04.2012 Bulletin 2012/17**

(21) Application number: **08759884.3**

(22) Date of filing: **21.05.2008**

(51) Int Cl.:
***C08F 210/06*** (2006.01) ***C08F 4/646*** (2006.01)
***C08F 4/654*** (2006.01)

(86) International application number:
**PCT/EP2008/056283**

(87) International publication number:
**WO 2008/142122 (27.11.2008 Gazette 2008/48)**

(54) **POLYPROPYLENE COPOLYMER**

POLYPROPYLEN-COPOLYMER

COPOLYMÈRE DE POLYPROPYLÈNE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.05.2007 EP 07010183**

(43) Date of publication of application:
**17.02.2010 Bulletin 2010/07**

(60) Divisional application:
**11150027.8 / 2 295 478**

(73) Proprietor: **Borealis Technology OY**
**06101 Porvoo (FI)**

(72) Inventors:
- **REICHELT, Kristin**
**A-4501 Neuhofen/Krems (AT)**
- **BERNREITNER, Klaus**
**A-4010 Linz (AT)**
- **RAUCH, Martin**
**A-4192 Schenkenfelden (AT)**

(74) Representative: **Maiwald Patentanwalts GmbH**
**Elisenhof**
**Elisenstrasse 3**
**80335 München (DE)**

(56) References cited:
**EP-A1- 0 854 155**
**EP-A2- 0 480 190**
**EP-A2- 0 811 888**
**WO-A-92/19653**
**WO-A-92/19658**
**WO-A-97/26287**
**US-A1- 2001 039 314**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 152 768 B1

## Description

**[0001]** The present invention relates to a new class of propylene copolymers and their manufacture.

**[0002]** Well-known propylene copolymers of commerce are characterized by improved impact strength and lower brittleness compared to the propylene homopolymer counterparts. Thus propylene copolymers, in particular with the α-olefin comonomer being ethylene, have found widespread applications for example in the production of polymer films, of articles produced by blow moulding or injection moulding, of fibers and of pipes. Among these applications, the most important is the use for the production of films. Such films may be used for packaging such as food packaging. In general, for the production of propylene copolymers propylene is copolymerised with an α-olefin in a slurry or gas phase polymerisation reaction in the presence of a suitable catalyst. The amount of comonomer, i.e. α-olefin, normally does not exceed 10 mol% of the total polymer.

**[0003]** Commercial propylene copolymers usually have a predetermined comonomer distribution which can be slightly tuned to a limited extent by varying the temperature of the process.

**[0004]** In such propylene copolymers the α-olefin is randomly distributed, i.e. the α-olefin units do not form blocks comprising only such comonomer units but instead are evenly distributed as single units within the polypropylene blocks which essentially make up the polymer chains. Moreover in such propylene copolymers the α-olefin comonomers concentrate in short polymer chains.

**[0005]** It is known that important properties such as the transparency and the toughness, i.e. the impact strength, for instance of a film comprising said propylene copolymers are influenced by the comonomer distribution. It is also known, that the impact strength can be increased with increasing the amount of the comonomer content. However such an improvement in impact strength is paid with a deterioration of the processing properties as the stickiness of material is highly increased leading to reactor fouling. Moreover also the transparency suffers from rather high amounts of comonomers, like ethylene. It also must considered that the melting point of known propylene copolymers are very sensitive to the increase of comonomer content, i.e. high levels of comonomer lowers the melting point and/or the crystallization point undesirably.

**[0006]** Thus up to now it was impossible to provide propylene copolymers with improved balance between mechanical properties, thermal properties and processing properties. It was in particular not possible to enhance the impact strength of propylene copolymers by keeping constant the melting properties of said propylene copolymers, the transparency of films based on said propylene copolymers and the processing properties of said propylene copolymer films simultaneously.

**[0007]** Therefore the object of the present invention is to provide a propylene copolymer having an improved balance between mechanical properties, thermal properties and processing properties. It is in particular an object of the invention to improve the toughness of materials based on said propylene copolymer by keeping the transparency at high level. More particularly it is sought for a propylene copolymer with improved toughness having excellent process properties, i.e. the copolymer is less sticky compared to the propylene copolymers being state of the art and causes no reactor fouling. Moreover the melting properties of the propylene copolymer shall be preferably only little influenced by the comonomer content.

**[0008]** The finding of the present invention is that the xylene soluble fraction of the propylene copolymer must have rather high intrinsic viscosity. Another finding of the present invention is that the distribution curve of the average isolactic chain length of the propylene copolymer shows at least two distinct maxima, i.e. the comonomer units are not equally distributed among the individual chains of the propylene copolymer.

**[0009]** In a first embodiment of the present invention a propylene copolymer is provided comprising monomer units of propylene and at least one other α-olefin as a comonomer, wherein

(a) the weight ratio of the comonomer to the sum of monomers present in said polypropylene copolymer (comonomer /(comonomer + propylene)) is at least 2.0 wt.-%,
(b) said propylene copolymer comprises a fraction having a lamella thickness of more than 9.0 nm,
(c) said fraction with a lamella thickness of more than 9.0 nm has a higher melt enthalpy [J/g] as each fraction with a lamella thickness below 9.0 nm, and
(d) said fractions are determined by stepwise isothermal segregation technique (SIST).

**[0010]** Accordingly the propylene copolymer according to the first embodiment can be also defined by a propylene copolymer comprising monomer units of propylene and at least one other α-olefin as a comonomer, wherein

(a) the weight ratio of the comonomer to the sum of monomers present in said polypropylene copolymer (comonomer /(comonomer + propylene)) is at least 2.0 wt.-%,
(b) said propylene copolymer comprises a fraction having a lamella thickness of more than 9.0 nm,
(c) said fraction with a lamella thickness of more than 9.0 nm has a higher melt enthalpy [J/g] as each fraction with

a lamella thickness below 9.0 nm,

(d) said fractions are determined by stepwise isothermal segregation technique (SIST), wherein the propylene copolymer

(i) is melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to t 15 °C
(ix) held for 2 hours at 115 °C,
(x) then cooled with 80 °C/min to 105 °C
(xi) held for 2 hours at 105 °C,
(xii) then cooled down to -10 °C, i.e. cooled down to -10 °C with maxima cooling rate by a compression-cooling unit
(xiii) then heated at a heating rate of 10 °C/min up to 200 °C obtaining a melting curve of said cooled propylene copolymer

(e) the absolute minimum and the relative minima of said melting curve are converted in the lamella thickness according to the Thomson-Gibbs equation (Eq 1.)

$$T_m = T_0\left(1 - \frac{2\sigma}{\Delta H_0 \cdot L}\right) \quad (1)$$

wherein

$T_0$ = 457 K,
$\Delta H_0 = 184 \times 10^6$ J/m$^3$,
$\sigma$ = 0.0496 J/m$^2$,
$T_m$ is the measured temperature (K) and
L is the lamella thickness (nm), and

wherein

(i) the absolute minimum indicates the lamella thickness of the fraction having a lamella thickness of more than 9.0 nm and
(ii) the relative minima indicate the lamella thickness of the fractions having a lamella thickness of below 9.0 nm, and

(f) the melt enthalpy [Jig] of each fraction is defined by the area above each minimum of the melting curve.

**[0011]** The exact measuring method of the stepwise isothermal segregation technique (SIST), in particular the determination of the melt enthalpy [J/g], is given in the example section.

**[0012]** Surprisingly, it has been found that propylene copolymers with such characteristics have superior properties compared to the propylene copolymers known in the art. Especially the propylene copolymers of the instant invention have superior impact resistance and brittle behavior compared to commercially available propylene copolymers (see Figures 17 and l8) Moreover the propylene copolymers keep over a broad range of comonomer content at a high level their transparency in terms of haze (Figure 20). Also the melting and crystallization temperature of the inventive propylene copolymers are less influenced by the comonomer content and kept at high level (see Figures 11 to 14). Thus the propylene copolymer combines the benefit of reduced stickiness, i.e. better processability, and enhanced mechanical properties for instance in terms of improved impact resistance.

**[0013]** The first requirement according to the first embodiment of the present invention is that the propylene copolymer comprises beside propylene a certain amount of comonomer being an $\alpha$-olefin. Preferred a-olefins are selected from the group consisting of ethylene, $C_4$ $\alpha$-olefin, $C_5$ $\alpha$-olefin, $C_6$ $\alpha$-olefin to. $C_8$ $\alpha$-olefin, more preferably selected from the group consisting of ethylene, 1-butene, 1-hepten, 1-hexene and 1-octane, still more preferably selected from the group

consisting of ethylene and $C_4$ α-olefin, yet more preferably selected from the group consisting of ethylene and 1-butene, and most preferably ethylene. The propylene copolymer may comprise mixtures of the above mentioned comonomers, however it is preferred that the propylene copolymer comprises only one species of α-olefin as a comonomer. In the most preferred embodiment the propylene copolymer comprises only propylene and ethylene.

**[0014]** The amount of comonomer present in the propylene copolymer must be at least 2.0 wt.-% to obtain the desired properties in particular with regard to the mechanical properties, like superior impact resistance. More precisely the weight ratio of the comonomer (being a α-olefin as defined above) to the sum of monomers present in said polypropylene copolymer (comonomer / (comonomer + propylene)) is at least 2. 0 wt.-%, more preferably is at least 3.0 wt.-% and still more preferably is at least 5.0 wt.-%. On the other hand the comonomer should be preferably not to high otherwise the polymer might loose its rigidity. Accordingly the weight ratio of the comonomer to the sum of monomers present in said polypropylene copolymer (comonomer / (comonomer + propylene)) shall preferably not exceed 30.0 wt.-%, more preferably not exceed 15.0 wt.%, still more preferably not exceed 10.0 wt.-% and yet more preferably shall not exceed 8.0 wt.%. Preferred ranges are 2.0 to 20.0 wt.-%, more preferred 2.0 to 12.0 wt.-%, yet more preferred 2.0 to 10.0 wt.-%, still more preferred 3.00 to 10.0 wt.-%, still yet more preferred 3.0 to 8.0 wt.-%, and most preferred 5.0 to 7.0 wt.-%. Accordingly it is preferred that the propylene copolymer according to this invention is a random propylene copolymer. The comonomer content can be determined with FT infrared spectroscopy, as described below in the example section.

**[0015]** Furthermore the propylene copolymer according to this invention is further specified by its lamellar thickness distribution. The stepwise isothermal segregation technique (SIST) provides a possibility to determine the lamellar thickness distribution. The precise measuring method is specified in the example section (in particular the definition of the lamella thickness of each fraction and its melt enthalpy). Thereby rather high amounts (rather high melt enthalpy [J/g]) of polymer fractions crystallizing at high temperatures indicate a rather high amount of thick lamellae.

**[0016]** It has been recognized that the improved balance between the mechanical and process properties can be only achieved with a new class of propylene copolymer having a specific lamellar thickness distribution, i.e. a propylene copolymer comprising a fraction with a lamella thickness of more than 9.0 nm. More preferably the propylene copolymer comprises a fraction with a lamella thickness of more than 9.2 nm, still more preferably of more than 9.5 mn. Preferred ranges for said fraction are from 9.0 to 12.0 nm, more preferred from 9.2 to 11.0 nm.

**[0017]** A further requirement of the above defined fraction is that it represents the largest fraction of all fractions, in particular compared to the fractions with a lamella thickness below 9.0 nm, of the propylene copolymer. Accordingly the propylene copolymer comprises a fraction with a lamella thickness of more than 9.0 nm (the other preferred values for the lamella thickness are given above) having a higher melt enthalpy [J/g] as each lamella fraction with a lamella thickness below 9.0 nm. More preferably the fraction with a lamella thickness of more than 9. 0 nm has melt enthalpy of more than 20.0 J/g, still more preferably of more than 21.0 J/g. Concerning the fractions below 9.0 nm it is preferred that the they have a melt enthalpy of not more than 30.0 J/g. It is in particular preferred that the fractions with a lamella thickness in the range of 6.5 to 9.0 nm have a melt enthalpy in the range of 15.0 to 30.0 J/g.

**[0018]** The propylene copolymer according to this invention is further preferably defined by its isotactic sequence length distribution.

**[0019]** The measurement of isotactic sequence length distribution is performed in the instant invention by using the temperature rising elution fraction (TREF) technique (the exact description is given in the experimental part), which fractionates propylene copolymers according to the solubility differences. It has been clearly demonstrated for propylene polymers that the temperature rising elution fraction (TREF) technique fractionates the propylene polymer according to the longest crystallisable sequences in the chain, which increases almost linearly with the elution temperature (P. Ville et al., Polymer 42 (2001) 1953-1967). Hence the higher the maximum temperature the longer are the isotactic sequences. The results further showed that the temperature rising elution fraction (TREF) technique does not strictly fractionate polypropylene according to tacticity but according to the longest crystallisable sequences in the chain. The solubility of a polypropylene polymer chain hence is influence only by the concentration and distribution of sterical defects. Insofar the temperature rising elution fraction (TREF) technique is an appropriate method to characterize the inventive propylcnc copolymer further.

**[0020]** Thus it is preferred that the propylene copolymer posses a distribution curve of the average isotactic chain length featured by at least two distinct maxima, i.e. the comonomer units are not equally distributed among the individual chains of the propylene copolymer. Accordingly it is preferred that the temperature rising elution fractionation (TREF) curve of the inventive propylene copolymer comprises at least two local maxima

(a) one absolute maximum over 100 °C, more preferably between 100 to 110 °C, and,
(b) one relative maximum between 50 and 85°C, more preferably between 55 to 80°C, and yet more preferably between 60 and 80 °C.

**[0021]** More preferably the area below the absolute maximum of that the temperature rising elution fractionation (TREF) function is in the range of 50 to 85 wt-%, more preferably in the range of 50 to 80 wt.-% and yet more preferably in the

range of 55 to 80 wt.%. With regard to the area below the relative maximum of the temperature rising elution fractionation (TREF) function as defined above it is preferred that it is in the range of 10 to 30 wt.%, more preferably in the range of 10 to 25 wt.-%.

**[0022]** Moreover it is preferred that the propylene copolymer has xylene solubles of some extent, i.e. of at least 2.0 wt.-%. Xylene solubles are the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas.

**[0023]** Preferably, the propylene copolymer has xylene solubles of more than 3.0 wt.-%, more preferably of more than 4.0 wt.-% and yet more preferably of more than 6.0 wt.-%. On the other hand, the amount of xylene solubles should not be too high since they represent a potential contamination risk. Accordingly it is preferred that the xylene solubles are not more than 40.0 wt.-%, still more preferably not more than 35.0 wt.-% and yet more preferably not more than 20.0 wt.-%. In preferred embodiments the xylene solubles are in the range of 5.0 to 40.0 wt.-%, more preferably in the range of 6.0 to 30.0 wt.-% and still more preferably in the range of 6.0 to 20.0 wt.-% like 6.5 to 10 wt.-%.

**[0024]** Additionally it is appreciated that the xylene soluble fraction of the inventive propylene copolymer is characterized by a rather high intrinsic viscosity. Common propylene copolymer have normally xylene soluble fractions with a rather low intrinsic viscosity, which is reflected in increased stickiness leading to reactor fouling.

**[0025]** The intrinsic viscosity is a measure of the capability of a polymer in solution to enhance the viscosity of said solution. The viscosity behavior of macromolecular substances in solution is one of the most frequently used approaches for characterization. The intrinsic viscosity number is defined as the limiting value of the specific viscosity/concentration ratio at zero concentration. It thus becomes necessary to find the viscosity at different concentrations and then extrapolate to zero concentration. The variation of the viscosity number with concentration depends on the type of molecule as well as the solvent. In general, the intrinsic viscosity of linear macromolecular substances is related to the molecular weight or degree of polymerization. With macromolecules, viscosity number measurements provide a method for the rapid determination of molecular weight when the relationship between viscosity and molecular weight has been established. The intrinsic viscosity in the instant invention is measured according to DIN ISO 1628/1, October 1999 (in Decalin at 135°C).

**[0026]** Accordingly the propylene copolymer according to this invention preferably fulfils the equation (2), more preferably the equation (2a), yet more preferably the equation (2b), still more preferably the equation (2c), still yet more preferably the equation (2d), like the equation (2e)

$$\mathrm{IV\ (XS)\ [dl/g]} - 0.3085 \cdot \mathrm{IV\ [dl/g]} > -0.1143 \qquad (2)$$

$$\mathrm{IV\ (XS)\ [dl/g]} - 0.3085 \cdot \mathrm{IV\ [dl/g]} > -0.1101 \qquad (2a)$$

$$\mathrm{IV\ (XS)\ [dl/g]} - 0.3085 \cdot \mathrm{IV\ [dl/g]} > -0.0501 \qquad (2b)$$

$$\mathrm{IV\ (XS)\ [dl/g]} - 0.31 \cdot \mathrm{IV\ [dl/g]} > -0.05 \qquad (2c)$$

$$\mathrm{IV\ (XS)\ [dl/g]} - 0.3 \cdot \mathrm{IV\ [dl/g]} > -0.2 \qquad (2d)$$

$$\mathrm{IV\ (XS)\ [dl/g]} - 0.3 \cdot \mathrm{IV\ [dl/g]} > -0.1 \qquad (2e)$$

wherein

IV (XS) is the intrinsic viscosity of the xylene soluble fraction of the polypropylene copolymer measured according DIN ISO 1628/1 and

IV is the intrinsic viscosity of the total polypropylene copolymer measured according DIN ISO 1628/1.

**[0027]** As can be seen from figure 7 the equations (2), (2a), (2b), (2c), (2d) and (2e), respectively define in a simple manner the benefit of the invention. The inventive propylene copolymers have a xylene soluble fraction with a significant

higher intrinsic viscosity compared to the known propylene copolymers being state of the art. This positive property is reached independently from the comonomer content present in the propylene copolymer of the instant invention.

**[0028]** Moreover the high intrinsic viscosity values of the xylene soluble fraction of the inventive propylene copolymers are also reached in broad range of melt flow rate. This can be easily learned from figure 8. Thus it is preferred that the propylene copolymer of the instant invention fulfils the equation (3), more preferably the equation (3a), yet more preferably the equation (3b), still more preferably (3c),

$$\text{IV (XS) [dl/g]} + 0.0083\ \text{MFR [g/10min]} > 0.601 \qquad (3)$$

$$\text{IV (XS) [dl/g]} + 0.0083\ \text{MFR [g/10min]} > 0.621 \qquad (3a)$$

$$\text{IV (XS) [dl/g]} + 0.0083\ \text{MFR [g/10min]} > 0.641 \qquad (3b)$$

$$\text{IV (XS) [dl/g]} + 0.01\ \text{MFR [g/10min]} > 0.64 \qquad (3c)$$

wherein

IV (XS) is the intrinsic viscosity of the xylene soluble fraction of said polypropylene copolymer measured according DIN ISO 1628/l, and
MFR is the melt flow rate measured according to ISO 1133 at 230 °C and 2.16 kg load.

**[0029]** Additionally it is preferred that the xylene soluble fraction of the inventive propylene copolymer as defined herein has a intrinsic viscosity of at least 0.4 dl/g, more preferably of at least 0.5 dl/g. Moreover it is appreciated that the intrinsic viscosity of the total propylene copolymer reaches a certain value. Thus it is preferred that the intrinsic viscosity of the total propylene copolymer is at least 1.0 dl/g, more preferably at least 1.2 dl/g.

**[0030]** In a second embodiment of the present invention a propylene copolymer is provided comprising monomer units of propylene and at least one other α-olefin as a comonomer, wherein

(a) the weight ratio of the comonomer to the sum of monomers present in said polypropylene copolymer (comonomer/(comonomer + propylene)) is at least 2.0 wt.-%, and
(a) the temperature rising elution fractionation (TREF) curve of said propylene copolymer comprises at least two local maxima

(i) one absolute maximum over 100 °C, and
(ii) one relative maximum between 50 and 80 °C.

**[0031]** Surprisingly, it has been found that that propylene copolymers with such characteristics have superior properties compared to the propylene copolymers known in the art. Especially the propylene copolymers of the instant invention have superior impact resistance and brittle behaviour compared to commercially available propylene copolymers (see Figures 17, 18) Moreover the propylene copolymers keep over a broad range of comonomer content at a high level their transparency in terms of haze (Figure 20). Also the melting and crystallization temperature of the inventive propylene copolymers are less influenced by the comonomer content and kept at high level (see Figures 11 to 14). Thus the propylene copolymer combines the benefit of reduced stickiness, i.e. better processability, and enhanced mechanical properties for instance in terms of improved impact resistance.

**[0032]** The first requirement according to the second embodiment of the present invention is that the propylene copolymer comprises beside propylene a certain amount of comonomer being an α-olefin. Preferred α-olefins are selected from the group consisting of ethylene, $C_4$ α-olefin, $C_5$ α-olefin and $C_6$ α-olefin to $C_8$ α-olefin, more preferably selected from the group consisting of ethylene, 1-butene, 1-heptene, 1-hexene and 1-octene, still more preferably selected from the group consisting of ethylene and $C_4$ α-olefin, yet more preferably selected from the group consisting of ethylene and 1-butene, and most preferably ethylene. The propylene copolymer may comprise mixtures of the above mentioned comonomers, however it is preferred that the propylene copolymer comprises only one species of α-olefin as a comonomer. In the most preferred embodiment the propylene copolymer comprises only propylene and ethylene.

**[0033]** The amount of comonomer present in the propylene copolymer must be at least 2.0 wt.-% to obtain the desired

properties in particular with regard to the mechanical properties, like superior impact resistance. More precisely the weight ratio of the comonomer (being a $\alpha$-olefin as defined above) to the sum of monomers present in said polypropylene copolymer (comonomer / (comonomer + propylene)) is at least 2.0 wt.-%, more preferably is at least 3.0 wt.-% and still more preferably is at least 5.0 wt.-%. On the other hand the comonomer should be preferably not to high otherwise the polymer might loose its rigidity. Accordingly the weight ratio of the comonomer to the sum of monomers present in said polypropylene copolymer (comonomer / (comonomer + propylene)) shall preferably not exceed 30.0 wt.-%, more preferably not exceed 15.0 wt.%, still more preferably not exceed 10.0 wt.-% and yet more preferably shall not exceed 8.0 wt.-%. Preferred ranges are 2.0 to 20.0 wt.-%, more preferred 2.0 to 12.0 wt.%, yet more preferred 2.0 to 10.0 wt.%, still more preferred 3.0 to 10.0 wt.-%, still yet more preferred 3.0 to 8.0 wt.-%, and most preferred 5.0 to 7.0 wt.-%. Accordingly it is preferred that the propylene copolymer according to this invention is a random propylene copolymer. The comonomer content can be determined with FT infrared spectroscopy, as described below in the example section.

**[0034]** The propylene copolymer according to this invention is further defined by its isotactic sequence length distribution.

**[0035]** The measurement of isotactic sequence length distribution is performed in the instant invention by using the temperature rising elution fraction (TREF) technique (the exact description is given in the experimental part), which fractionates propylene copolymers according to the solubility differences. It has been clearly demonstrated for propylene polymers that the temperature rising elution fraction (TREF) technique fractionates the propylene polymer according to the longest crystallisable sequences in the chain, which increases almost linearly with the elution temperature (P. Ville et al., Polymer 42 (2001) 1953-1967). Hence the higher the maximum temperature the longer are the isotactic sequences. The results further showed that the temperature rising elution fraction (TREF) technique does not strictly fractionate polypropylene according to tacticity but according to the longest crystallisable sequences in the chain. The solubility of a polypropylene polymer chain hence is influenced only by the concentration and distribution of sterical defects. Insofar the temperature rising elution fraction (TREF) technique is an appropriate method to characterize the inventive propylene copolymer further.

**[0036]** The propylene copolymer according to the instant invention differs from known propylene copolymers in its temperature rising elution fractionation (TREF) function (see Figures 4 and 5). The inventive propylene copolymer posses a distribution curve of the average isotactic chain length featured by at least two distinct maxima, i.e. the comonomer units are not equally distributed among the individual chains of the propylene copolymer. Accordingly it is preferred that the temperature rising elution fractionation (TREF) curve of the inventive propylene copolymer comprises at least two local maxima

(i) one absolute maximum over 100 °C, more preferably between 100 to 110 °C, and,
(ii) one relative maximum between 50 and 85 °C, more preferably between 55 to 80 °C, and yet more preferably between 60 and 80 °C.

**[0037]** More preferably the area below the absolute maximum of that the temperature rising elution fractionation (TREF) function is in the range of 50 to 85 wt.-%, more preferably in the range of 50 to 80 wt.-% and yet more preferably in the range of 55 to 80 wt.-%. With regard to the area below the relative maximum of the temperature rising elution fractionation (TREF) function as defined above it is preferred that it is in the range of 10 to 30 wt.-%, more preferably in the range of 10 to 25 wt.-%.

**[0038]** Furthermore the propylene copolymer according to this invention is preferably further specified by its lamellar thickness distribution. The stepwise isothermal segregation technique (SIST) provides a possibility to determine the lamellar thickness distribution. The precise measuring method is specified in the example section (in particular the definition of the lamella thickness of each fraction and its melt enthalpy). Thereby rather high amounts (rather high melt enthalpy [J/g]) of polymer fractions crystallizing at high temperatures indicate a rather high amount of thick lamellae.

**[0039]** It has been recognized that the improved balance between the mechanical and process properties can be achieved with a propylene copolymer having a specific lamellar thickness distribution, i.e. a propylene copolymer comprising a fraction with a lamella thickness of more than 9.0 nm. More preferably the propylene copolymer comprises a fraction with a lamella thickness of more than 9.2 nm, still more preferably of more than 9.5 nm. Preferred ranges for said fraction are from 9.0 to 12.0 nm, more preferred from 9.2 to 11.0 nm.

**[0040]** A further requirement of the above defined fraction is that it represents the largest fraction of all fractions, in particular compared to the fractions with a lamella thickness below 9.0 nm, of the propylene copolymer. Accordingly the propylene copolymer comprises a fraction with a lamella thickness of more than 9.0 nm (the other preferred values for the lamella thickness are given above) having a higher melt enthalpy [J/g] as each lamella fraction with a lamella thickness below 9.0 nm. More preferably the fraction with a lamella thickness of more than 9.0 nm has melt enthalpy of more than 20.0 J/g, still more preferably of more than 21.0 J/g. Concerning the fractions below 9.0 nm it is preferred that the they have a melt enthalpy of not more than 30.0 J/g. It is in particular preferred that the fractions with a lamella thickness in the range of 6.5 to 9.0 nm have a melt enthalpy in the range of 15.0 to 30.0 J/g

**[0041]** Moreover it is preferred that the propylene copolymer has xylene solubles of some extent, i.e. of at least 2.0 wt.-%. Xylene solubles are the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas.

**[0042]** Preferably, the propylene copolymer has xylene solubles of more than 6.0 wt.-%. On the other hand, the amount of xylene solubles should not be too high since they represent a potential contamination risk. Accordingly it is preferred that the xylene solubles arc not more than 40.0 wt.-%, still more preferably not more than 35.0 wt.-% and yet more preferably not more than 20.0 wt.-%. In preferred embodiments the xylene solubles are in the range of 5.0 to 40.0 wt.-%, more preferably in the range of 6.0 to 30.0 wt.-% and still more preferably in the range of 6.0 to 20.0 wt.-%.

**[0043]** Additionally it is appreciated that the xylene soluble fraction of the inventive propylene copolymer is characterized by a rather high intrinsic viscosity. Common propylene copolymer have normally xylene soluble fractions with a rather low intrinsic viscosity, which is reflected in increased stickiness leading to reactor fouling.

**[0044]** The intrinsic viscosity is a measure of the capability of a polymer in solution to enhance the viscosity of said solution. The viscosity behavior of macromolecular substances in solution is one of the most frequently used approaches for characterization. The intrinsic viscosity number is defined as the limiting value of the specific viscosity/concentration ratio at zero concentration. It thus becomes necessary to find the viscosity at different concentrations and then extrapolate to zero concentration. The variation of the viscosity number with concentration depends on the type of molecule as well as the solvent. In general, the intrinsic viscosity of linear macromolecular substances is related to the molecular weight or degree of polymerization. With macromolecules, viscosity number measurements provide a method for the rapid determination of molecular weight when the relationship between viscosity and molecular weight has been established. The intrinsic viscosity in the instant invention is measured according to DIN ISO 1628/1, October 1999 (in Decalin at 135 °C).

**[0045]** Accordingly the propylene copolymer according to this invention preferably fulfils the equation (2), more preferably the equation (2a), yet more preferably the equation (2b), still more preferably the equation (2c), still yet more preferably the equation (2d), like the equation (2e)

$$IV\ (XS)\ [dl/g] - 0.3085 \cdot IV\ [dl/g] > -0.1143 \qquad (2)$$

$$IV\ (XS)\ [dl/g] - 0.3085 \cdot IV\ [dl/g] > -0.1101 \qquad (2a)$$

$$IV\ (XS)\ [dl/g] - 0.3085 \cdot IV\ [dl/g] > -0.0501 \qquad (2b)$$

$$IV\ (XS)\ [dl/g] - 0.31 \cdot IV\ [dl/g] > -0.05 \qquad (2c)$$

$$IV\ (XS)\ [dl/g] - 0.3 \cdot IV\ [dl/g] > -0.2 \qquad (2d)$$

$$IV\ (XS)\ [dl/g] - 0.3 \cdot IV\ [dl/g] > -0.1 \qquad (2e)$$

wherein

IV (XS) is the intrinsic viscosity of the xylene soluble fraction of the polypropylene copolymer measured according DIN ISO 1628/l and
IV is the intrinsic viscosity of the total polypropylene copolymer measured according DIN ISO 1628/1.

**[0046]** As can be seen from figure 7 the equations (2), (2a), (2b), (2c), (2d) and (2e), respectively define in a simple manner the benefit of the invention. The inventive propylene copolymers have a xylene soluble fraction with a significant higher intrinsic viscosity compared to the known propylene copolymers being state of the art. This positive property is reached independently from the comonomer content present in the propylene copolymer of the instant invention.

**[0047]** Moreover the high intrinsic viscosity values of the xylene soluble fraction of the inventive propylene copolymers arc also reached in broad range of melt flow rate. This can be easily learned from figure 8. Thus it is preferred that the

propylene copolymer of the instant invention fulfils the equation (3), more preferably the equation (3a), still more preferably the equation (3b), yet more preferably the equation (3c)

$$IV\,(XS)\,[dl/g] + 0.0083\,MFR\,[g/10min] > 0.601 \quad (3)$$

$$IV\,(XS)\,[dl/g] + 0.0083\,MFR\,[g/10min] > 0.621 \quad (3a)$$

$$IV\,(XS)\,[dl/g] + 0.0083\,MFR\,[g/10min] > 0.641 \quad (3b)$$

$$IV\,(XS)\,[dl/g] + 0.01\,MFR\,[g/10min] > 0.64 \quad (3c)$$

wherein

IV (XS) is the intrinsic viscosity of the xylene soluble fraction of said polypropylene copolymer measured according DIN ISO 1628/1, and
MFR is the melt flow rate measured according to ISO 1133 at 230 °C and 2.16 kg load.

**[0048]** Additionally it is preferred that the xylene soluble fraction of the inventive propylene copolymer as defined herein has a intrinsic viscosity of at least 0.4 dl/g, more preferably of at least 0.5 dl/g. Moreover it is appreciated that the intrinsic viscosity of the total propylene copolymer reaches a certain value. Thus it is preferred that the intrinsic viscosity of the total propylene copolymer is at least 1.0 dl/g, more preferably at least 1.2 dl/g.

**[0049]** In a third embodiment of the present invention a propylene copolymer is provided comprising monomer units of propylene and at least one other α-olefin as a comonomer, wherein

(a) the weight ratio of the α-olefin to the sum of monomers present in said polypropylene copolymer (comonomer / (comonomer + propylene)) is at least 2.0 wt.-%,
(b) said propylene copolymer comprises a xylene soluble fraction (XS) of at least 2.0 wt.-%, and
(c) said polypropylene copolymer fulfils the equation 2

$$IV\,(XS)\,[dl/g] - 0.3085 \cdot IV\,[dl/g] > -0.1143 \quad (2)$$

wherein

IV (XS) is the intrinsic viscosity of the xylene soluble fraction of said polypropylene copolymer measured according DIN ISO 1628/1 and
IV is the intrinsic viscosity of the total polypropylene copolymer measured according DIN ISO 1628/1.

**[0050]** Surprisingly, it has been found that propylene copolymers with such characteristics have superior properties compared to the propylene copolymers known in the art. Especially the propylene copolymers of the instant invention have superior impact resistance and brittle behaviour compared to commercially available propylene copolymers (see Figures 17, 18) Moreover the propylene copolymers keep over a broad range of comonomer content at a high level their transparency in terms of haze (Figure 20). Also the melting and crystallization temperature of the inventive propylene copolymers are less influenced by the comonomer content and kept at high level (see Figures 11 to 14). Thus the propylene copolymer combines the benefit of reduced stickiness, i.e. better processability, and enhanced mechanical properties for instance in terms of improved impact resistance.

**[0051]** The first requirement according to the third embodiment of the present invention is that the propylene copolymer comprises beside propylene a certain amount of comonomer being an α-olefin. Preferred α-olefins are selected from the group consisting of ethylene, $C_4$ α-olefin, $C_5$ α-olefin and $C_6$ α-olefin to $C_8$ α-olefin, more preferably selected from the group consisting of ethylene, 1-butene, 1-heptene, 1-hexene and 1-octene, still more preferably selected from the group consisting of ethylene and $C_4$ α-olefin, yet more preferably selected from the group consisting of ethylene and 1-butene, and most preferably ethylene. The propylene copolymer may comprise mixtures of the above mentioned comonomers, however it is preferred that the propylene copolymer comprises only one species of α-olefin as a comonomer.

In the most preferred embodiment the propylene copolymer comprises only propylene and ethylene.

**[0052]** The amount of comonomer present in the propylene copolymer must be at least 2.0 wt.-% to obtain the desired properties in particular with regard to the mechanical properties, like superior impact resistance. More precisely the weight ratio of the comonomer (being a $\alpha$-olefin as defined above) to the sum of monomers present in said polypropylene copolymer (comonomer / (comonomer + propylene)) is at least 2.0 wt.-%, more preferably is at least 3.0 wt.-% and still more preferably is at least 5.0 wt.-%. On the other hand the comonomer should be preferably not to high otherwise the polymer might loose its rigidity. Accordingly the weight ratio of the comonomer to the sum of monomers present in said polypropylene copolymer (comonomer / (comonomer + propylene)) shall preferably not exceed 30.0 wt.-%, more preferably not exceed 15.0 wt. -%, still more preferably not exceed 10.0 wit.-% and yet more preferably shall not exceed 8.0 wt.-%. Preferred ranges are 2.0 to 20.0 wt.-%, more preferred 2.0 to 12.0 wt.-%, yet more preferred 2.0 to 10.0 wt.-%, still more preferred 3.0 to 10.0 wt.-%, still yet more preferred 3.0 to 8.0 wt.-%, and most preferred 5.0 to 7.0 wt.-%. Accordingly it is preferred that the propylene copolymer according to this invention is a random propylene copolymer. The comonomer content can be determined with FT infrared spectroscopy, as described below in the example section.

**[0053]** Moreover it is required that the propylene copolymer has xylene solubles of some extent, i.e. of at least 2.0 wt.-%. Xylene solubles arc the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas.

**[0054]** Preferably, the propylene copolymer has xylene solubles of more than 6.0 wt.-%. On the other hand, the amount of xylene solubles should not be too high since they represent a potential contamination risk. Accordingly it is preferred that the xylene solubles are not more than 40.0 wt.-%, still more preferably not more than 35.0 wt.-% and yet more preferably not more than 20.0 wt.-%. In preferred embodiments the xylene solubles are in the range of 5.0 to 40.0 wt.-%, more preferably in the range of 6.0 to 30.0 wt.-% and still more preferably in the range of 6.0 to 20.0 wt.-%.

**[0055]** As stated above it is required that the xylene soluble fraction of the inventive propylene copolymer is characterized by a rather high intrinsic viscosity. Common propylene copolymer have normally xylene soluble fractions with a rather low intrinsic viscosity, which is reflected in increased stickiness leading to reactor fouling.

**[0056]** The intrinsic viscosity is a measure of the capability of a polymer in solution to enhance the viscosity of said solution. The viscosity behavior of macromolecular substances in solution is one of the most frequently used approaches for characterization. The intrinsic viscosity number is defined as the limiting value of the specific viscosity/concentration ratio at zero concentration. It thus becomes necessary to find the viscosity at different concentrations and then extrapolate to zero concentration. The variation of the viscosity number with concentration depends on the type of molecule as well as the solvent. In general, the intrinsic viscosity of linear macromolecular substances is related to the molecular weight or degree of polymerization. With macromolecules, viscosity number measurements provide a method for the rapid determination of molecular weight when the relationship between viscosity and molecular weight has been established. The intrinsic viscosity in the instant invention is measured according to DIN ISO 1628/1, October 1999 (in Decalin at 135 °C).

**[0057]** Accordingly the propylene copolymer according to this invention fulfils the equation (2), preferably the equation (2a), yet more preferably the equation (2b), still more preferably the equation (2c), still yet more preferably the equation (2d), like the equation (2e)

$$\mathrm{IV\ (XS)\ [dl/g]} - 0.3085 \cdot \mathrm{IV\ [dl/g]} > -0.1143 \qquad (2)$$

$$\mathrm{IV\ (XS)\ [dl/g]} - 0.3085 \cdot \mathrm{IV\ [dl/g]} > -0.1101 \qquad (2a)$$

$$\mathrm{IV\ (XS)\ [dl/g]} - 0.3085 \cdot \mathrm{IV\ [dl/g]} > -0.0501 \qquad (2b)$$

$$\mathrm{IV\ (XS)\ [dl/g]} - 0.31 \cdot \mathrm{IV\ [dl/g]} > -0.05 \qquad (2c)$$

$$\mathrm{IV\ (XS)\ [dl/g]} - 0.3 \cdot \mathrm{IV\ [dl/g]} > -0.2 \qquad (2d)$$

$$\mathrm{IV\ (XS)\ [dl/g]} - 0.3 \cdot \mathrm{IV\ [dl/g]} > -0.1 \qquad (2e)$$

wherein

IV (XS) is the intrinsic viscosity of the xylene soluble fraction of the polypropylene copolymer measured according DIN ISO 1628/1 and
IV is the intrinsic viscosity of the total polypropylene copolymer measured according DIN ISO 1638/1.

**[0058]** As can be seen from figure 7 the equations (2), (2a), (2b), (2c), (2d) and (2e), respectively define in a simple manner the benefit of the invention. The inventive propylene copolymers have a xylene soluble fraction with a significant higher intrinsic viscosity compared to the known propylene copolymers being state of the art. This positive property is reached independently from the comonomer content present in the propylene copolymer of the instant invention.

**[0059]** Moreover the high intrinsic viscosity values of the xylene soluble fraction of the inventive propylene copolymers are also reached in broad range of melt flow rate. This can be easily learned from figure 8. Thus it is preferred that the propylene copolymer of the instant invention fulfils the equation (3), more preferably the equation (3 a), still more preferably the equation (3b), yet more preferably the equation (3c)

$$IV\ (XS)\ [dl/g] + 0.0083\ MFR\ [g/10min] > 0.601 \quad (3)$$

$$IV\ (XS)\ [dl/g] + 0.0083\ MFR\ [g/10min] > 0.621 \quad (3a)$$

$$IV\ (XS)\ [dl/g] + 0.0083\ MFR\ [g/10min] > 0.641 \quad (3b)$$

$$IV\ (XS)\ [dl/g] + 0.01\ MFR\ [g/10min] > 0.64 \quad (3c)$$

wherein

IV (XS) is the intrinsic viscosity of the xylene soluble fraction of said polypropylene copolymer measured according DIN ISO 1628/1, and
MFR is the melt flow rate measured according to ISO 1133 at 230°C and 2.16 kg load.

**[0060]** Additionally it is preferred that the xylene soluble fraction of the inventive propylene copolymer as defined herein has a intrinsic viscosity of at least 0.4 dl/g, more preferably of at least 0.5 dl/g. Moreover it is appreciated that the intrinsic viscosity of the total propylene copolymer reaches a certain value. Thus it is preferred that the intrinsic viscosity of the total propylene copolymer is at least 1.0 dl/g, more preferably at least 1.2 dl/g.

**[0061]** Furthermore the propylene copolymer according to this invention is preferably further specified by its lamellar thickness distribution. The stepwise isothermal segregation technique (SIST) provides a possibility to determine the lamellar thickness distribution. The precise measuring method is specified in the example section (in particular the definition of the lamella thickness of each fraction and its melt enthalpy). Thereby rather high amounts (rather high melt enthalpy [J/g]) of polymer fractions crystallizing at high temperatures indicate a rather high amount of thick lamellae.

**[0062]** It has been recognized that the improved balance between the mechanical and process properties can be achieved with a propylene copolymer having a specific lamellar thickness distribution, i.e. a propylene copolymer comprising a fraction with a lamella thickness of more than 9.0 nm. More preferably the propylene copolymer comprises a fraction with a lamella thickness of more than 9.2 nm, still more preferably of more than 9.5 nm. Preferred ranges for said fraction are from 9.0 to 12.0 nm, more preferred from 9.2 to 11.0 nm.

**[0063]** A further requirement of the above defined fraction is that it represents the largest fraction of all fractions, in particular compared to the fractions with a lamella thickness below 9.0 nm, of the propylene copolymer. Accordingly the propylene copolymer comprises a fraction with a lamella thickness of more than 9.0 nm (the other preferred values for the lamella thickness arc given above) having a higher melt enthalpy [J/g] as each lamella fraction with a lamella thickness below 9.0 nm. More preferably the fraction with a lamella thickness of more than 9.0 nm has melt enthalpy of more than 20.0 J/g, still more preferably of more than 21.0 J/g. Concerning the fractions below 9.0 nm it is preferred that the they have a melt enthalpy of not more than 30.0 J/g. It is in particular preferred that the fractions with a lamella thickness in the range of 6.5 to 9.0 nm have a melt enthalpy in the range of 15.0 to 30.0 J/g.

**[0064]** The propylene copolymer according to this invention is further preferably defined by its isotactic sequence length distribution.

**[0065]** The measurement of isotactic sequence length distribution is performed in the instant invention by using the temperature rising elution fraction (TREF) technique (the exact description is given in the experimental part), which fractionates propylene copolymers according to the solubility differences. It has been clearly demonstrated for propylene polymers that the temperature rising elution fraction (TREF) technique fractionates the propylene polymer according to the longest crystallisable sequences in the chain, which increases almost linearly with the elution temperature (P. Ville et al., Polymer 42 (2001) 1953-1967). Hence the higher the maximum temperature the longer are the isotactic sequences. The results further showed that the temperature rising elution fraction (TREF) technique does not strictly fractionate polypropylene according to tacticity but according to the longest crystallisable sequences in the chain. The solubility of a polypropylene polymer chain hence is influenced only by the concentration and distribution of sterical defects. Insofar the temperature rising elution fraction (TREF) technique is an appropriate method to characterize the inventive propylene copolymer further.

**[0066]** Thus it is preferred that the propylene copolymer posses a distribution curve of the average isotactic chain length featured by at least two distinct maxima, i.e. the comonomer units are not equally distributed among the individual chains of the propylene copolymer. Accordingly it is preferred that the temperature rising elution fractionation (TREF) curve of the inventive propylene copolymer comprises at least two local maxima

(i) one absolute maximum over 100 °C, more preferably between 100 to 110°C, and,
(ii) one relative maximum between 50 and 85°C, more preferably between 55 to 80 °C, and yet more preferably between 60 and 80 °C.

**[0067]** More preferably the area below the absolute maximum of that the temperature rising elution fractionation (TREF) function is in the range of 50 to 85 wt.-%, more preferably in the range of 50 to 80 wt.-% and yet more preferably in the range of 55 to 80 wt.-%. With regard to the area below the relative maximum of the temperature rising elution fractionation (TREF) function as defined above it is preferred that it is in the range of 10 to 30 wt.-%, more preferably in the range of 10 to 25 wt.-%.

**[0068]** In a fourth embodiment of the present invention a propylene copolymer is provided comprising monomer units of propylene and at least one other α-olefin as a comonomer, wherein

(a) the weight ratio of the α-olefin to the sum of monomers present in said polypropylene copolymer (comonomer / (comonomer + propylene)) is at least 2.0 wt.-%,
(b) said propylene copolymer comprises a xylene soluble fraction (XS) of at least 2.0 wt.-%, and
(c) said polypropylene copolymer fulfils the equation 3

$$\text{IV (XS) [dl/g]} + 0.0083\ \text{MFR [g/10min]} > 0.601 \qquad (3)$$

wherein

IV (XS) is the intrinsic viscosity of the xylene soluble fraction of said polypropylene copolymer measured according DIN ISO 1628/1 and
MFR is the melt flow rate measured according to ISO 1133 at 230 °C and 2.16 kg load.

**[0069]** Surprisingly, it has been found that propylene copolymers with such characteristics have superior properties compared to the propylene copolymers known in the art. Especially the propylene copolymers of the instant invention have superior impact resistance and brittle behaviour compared to commercially available propylene copolymers (see Figures 17, 18) Moreover the propylene copolymers keep over a broad range of comonomer content al a high level their transparency in terms of haze (Figure 20). Also the melting and crystallization temperature of the inventive propylene copolymers are less influenced by the comonomer content and kept at high level (sec Figures 11 to 14). Thus the propylene copolymer combines the benefit of reduced stickiness, i.e. better processability, and enhanced mechanical properties for instance in terms of improved impact resistance.

**[0070]** The first requirement according to the fourth embodiment of the present invention is that the propylene copolymer comprises beside propylene a certain amount of comonomer being an α-olefin. Preferred α-olefins are selected from the group consisting of ethylene, $C_4$ α-olefin, $C_5$ α-olefin and $C_6$ α-olefin to Cg α-olefin, more preferably selected from the group consisting of ethylene, 1-butene, 1-heptene, 1-hexene and 1-octene, still more preferably selected from the group consisting of ethylene and $C_4$ α-olefin, yet more preferably selected from the group consisting of ethylene and 1-butene, and most preferably ethylene. The propylene copolymer may comprise mixtures of the above mentioned comonomers, however it is preferred that the propylene copolymer comprises only one species of α-olefin as a comonomer.

In the most preferred embodiment the propylene copolymer comprises only propylene and ethylene.

**[0071]** The amount of comonomer present in the propylene copolymer must be at least 2.0 wt.-% to obtain the desired properties in particular with regard to the mechanical properties, like superior impact resistance. More precisely the weight ratio of the comonomer (being a $\alpha$-olefin as defined above) to the sum of monomers present in said polypropylene copolymer (comonomer / (comonomer + propylene)) is at least 2.0 wt.-%, more preferably is at least 3.0 wt.-% and still more preferably is at least 5.0 wt.-%. On the other hand the comonomer should be preferably not to high otherwise the polymer might loose its rigidity. Accordingly the weight ratio of the comonomer to the sum of monomers present in said polypropylene copolymer (comonomer / (comonomer + propylene)) shall preferably not exceed 30.0 wt.-%, more preferably not exceed 15.0 wt.-%, still more preferably not exceed 10.0 wt.-% and yet more preferably shall not exceed 8.0 wt.-%. Preferred ranges are 2.0 to 20.0 wt.-%, more preferred 2.0 to 12.0 wt.-%, yet more preferred 2.0 to 10.0 wt.-%. still more preferred 3.0 to 10.0 wt.-%, still yet more preferred 3.0 to 8.0 wt.-%, and most preferred 5.0 to 7.0 wt.-%. Accordingly it is preferred that the propylene copolymer according to this invention is a random propylene copolymer. The comonomer content can be determined with FT infrared spectroscopy, as described below in the example section.

**[0072]** Moreover it is required that the propylene copolymer has xylene solubles of some extent, i.e. of at least 2.0 wt.-%. Xylene solubles arc the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas.

**[0073]** Preferably, the propylene copolymer has xylene solubles of more than 6.0 wt.-%. On the other hand, the amount of xylene solubles should not be too high since they represent a potential contamination risk. Accordingly it is preferred that the xylene solubles are not more than 40.0 wt.-%, still more preferably not more than 35.0 wt.-% and yet more preferably not more than 20.0 wt.-%. In preferred embodiments the xylene solubles are in the range of 5.0 to 40.0 wt.-%, more preferably in the range of 6.0 to 30.0 wt.-% and still more preferably in the range of 6.0 to 20.0 wt.-%.

**[0074]** As stated above it is required that the xylene soluble fraction of the inventive propylene copolymer is characterized by a rather high intrinsic viscosity. Common propylene copolymer have normally xylene soluble fractions with a rather low intrinsic viscosity, which is reflected in increased stickiness leading to reactor fouling.

**[0075]** The intrinsic viscosity is a measure of the capability of a polymer in solution to enhance the viscosity of said solution. The viscosity behavior of macromolecular substances in solution is one of the most frequently used approaches for characterization. The intrinsic viscosity number is defined as the limiting value of the specific viscosity/concentration ratio at zero concentration. It thus becomes necessary to find the viscosity at different concentrations and then extrapolate to zero concentration. The variation of the viscosity number with concentration depends on the type of molecule as well as the solvent. In general, the intrinsic viscosity of linear macromolecular substances is related to the molecular weight or degree of polymerization. With macromolecules, viscosity number measurements provide a method for the rapid determination of molecular weight when the relationship between viscosity and molecular weight has been established. The intrinsic viscosity in the instant invention is measured according to DIN ISO 1628/1, October 1999 (in Decalin at 135°C).

**[0076]** Moreover the inventive propylene copolymers shall not only have a xylene soluble fraction with rather high intrinsic viscosity values but said inventive propylene copolymers shall also obtainable in broad range of melt flow rate. Thus as stated above the propylene copolymer of the instant invention fulfils the equation (3), more preferably the equation (3a) still more preferably the equation (3b), yet more preferably the equation (3c)

$$IV\ (XS)\ [dl/g] + 0.0083\ MFR\ [g/10min] > 0.601 \qquad (3)$$

$$IV\ (XS)\ [dl/g] + 0.0083\ MFR\ [g/10min] > 0.621 \qquad (3a)$$

$$IV\ (XS)\ [dl/g] + 0.0083\ MFR\ [g/10min] > 0.641 \qquad (3b)$$

$$IV\ (XS)\ [dl/g] + 0.01\ MFR\ [g/10min] > 0.64 \qquad (3c)$$

wherein

IV (XS) is the intrinsic viscosity of the xylene soluble fraction of said polypropylene copolymer measured according DIN ISO 1628/1, and

MFR is the melt flow rate measured according to ISO 1133 at 230°C and 2.16 kg load.

**[0077]** Additionally it is appreciated that the propylene copolymer according to this invention preferably fulfils the equation (2), more preferably the equation (2a), yet more preferably the equation (2b), still more preferably the equation (2c), still yet more preferably the equation (2d), like the equation (2e)

$$IV\ (XS)\ [dl/g] - 0.3085 \cdot IV\ [dl/g] > -0.1143 \qquad (2)$$

$$IV\ (XS)\ [dl/g] - 0.3085 \cdot IV\ [dl/g] > -0.1101 \qquad (2a)$$

$$IV\ (XS)\ [dl/g] - 0.3085 \cdot IV\ [dl/g] > -0.0501 \qquad (2b)$$

$$IV\ (XS)\ [dl/g] - 0.31 \cdot IV\ [dl/g] > -0.05 \qquad (2c)$$

$$IV\ (XS)\ [dl/g] - 0.3 \cdot IV\ [dl/g] > -0.2 \qquad (2d)$$

$$IV\ (XS)\ [dl/g] - 0.3 \cdot IV\ [dl/g] > -0.1 \qquad (2e)$$

wherein

IV (XS) is the intrinsic viscosity of the xylene soluble fraction of the polypropylene copolymer measured according DIN ISO 1628/1 and
IV is the intrinsic viscosity of the total polypropylene copolymer measured according DIN ISO 1628/1.

**[0078]** As can be seen from figure 7 the equations (2), (2a), (2b), (2c), (2d) and (2e), respectively define in a simple manner the benefit of the invention. The inventive propylene copolymers have a xylene soluble fraction with a significant higher intrinsic viscosity compared to the known propylene copolymers being state of the art. This positive property is reached independently from the comonomer content present in the propylene copolymer of the instant invention.

**[0079]** Additionally it is preferred that the xylene soluble fraction of the inventive propylene copolymer as defined herein has a intrinsic viscosity of at least 0.4 dl/g, more preferably of at least 0.5 dl/g. Moreover it is appreciated that the intrinsic viscosity of the total propylene copolymer reaches a certain value. Thus it is preferred that the intrinsic viscosity of the total propylene copolymer is at least 1.0 dl/g, more preferably at least 1.2 dl/g.

**[0080]** Furthermore the propylene copolymer according to this invention is preferably further specified by its lamellar thickness distribution. The stepwise isothermal segregation technique (SIST) provides a possibility to determine the lamellar thickness distribution. The precise measuring method is specified in the example section (in particular the definition of the lamella thickness of each fraction and its melt enthalpy). Thereby rather high amounts (rather high melt enthalpy [J/g]) of polymer fractions crystallizing at high temperatures indicate a rather high amount of thick lamellae.

**[0081]** It has been recognized that the improved balance between the mechanical and process properties can be achieved with a propylene copolymer having a specific lamellar thickness distribution, i.e. a propylene copolymer comprising a fraction with a lamella thickness of more than 9.0 nm. More preferably the propylene copolymer comprises a fraction with a lamella thickness of more than 9.2 nm, still more preferably of more than 9.5 nm. Preferred ranges for said fraction are from 9.0 to 12.0 nm, more preferred from 9.2 to 11.0 nm.

**[0082]** A further requirement of the above defined fraction is that it represents the largest fraction of all fractions, in particular compared to the fractions with a lamella thickness below 9.0 nm, of the propylene copolymer. Accordingly the propylene copolymer comprises a fraction with a lamella thickness of more than 9.0 nm (the other preferred values for the lamella thickness are given above) having a higher melt enthalpy [J/g] as each lamella fraction with a lamella thickness below 9.0 nm. More preferably the fraction with a lamella thickness of more than 9.0 nm has melt enthalpy of more than 20.0 J/g, still more preferably of more than 21.0 J/g. Concerning the fractions below 9.0 nm it is preferred that the they have a melt enthalpy of not more than 30.0 J/g. It is in particular preferred that the fractions with a lamella thickness in the range of 6.5 to 9.0 nm have a melt enthalpy in the range of 15.0 to 30.0 J/g.

**[0083]** The propylene copolymer according to this invention is further preferably defined by its isotactic sequence

length distribution.

**[0084]** The measurement of isotactic sequence length distribution is performed in the instant invention by using the temperature rising elution fraction (TREF) technique (the exact description is given in the experimental part), which fractionates propylene copolymers according to the solubility differences. It has been clearly demonstrated for propylene polymers that the temperature rising elution fraction (TREF) technique fractionates the propylene polymer according to the longest crystallisable sequences in the chain, which increases almost linearly with the elution temperature (P. Ville et al., Polymer 42 (2001) 1953-1967). Hence the higher the maximum temperature the longer arc the isotactic sequences. The results further showed that the temperature rising elution fraction (TREF) technique does not strictly fractionate polypropylene according to tacticity but according to the longest crystallisable sequences in the chain. The solubility of a polypropylene polymer chain hence is influenced only by the concentration and distribution of sterical defects. Insofar the temperature rising elution fraction (TREF) technique is an appropriate method to characterize the inventive propylene copolymer further.

**[0085]** Thus it is preferred that the propylene copolymer posses a distribution curve of the average isotactic chain length featured by at least two distinct maxima, i.e. the comonomer units are not equally distributed among the individual chains of the propylene copolymer. Accordingly it is preferred that the temperature rising elution fractionation (TREF) curve of the inventive propylene copolymer comprises at least two local maxima

(i) one absolute maximum over 100 °C, more preferably between 100 to 110 °C, and,

(ii) one relative maximum between 50 and 85 °C, more preferably between 55 to 80 °C, and yet more preferably between 60 and 80 °C.

**[0086]** More preferably the area below the absolute maximum of that the temperature rising elution fractionation (TREF) function is in the range of 50 to 85 wt.-%, more preferably in the range of 50 to 80 and yet more preferably in the range of 55 to 80 wt.-%. With regard to the area below the relative maximum of the temperature rising elution fractionation (TREF) function as defined above it is preferred that it is in the range of 10 to 30 wt.-%, more preferably in the range of 10 to 25 wt.-%.

**[0087]** The further features mentioned below apply to all embodiments described above, i.e. the first, second, third and the forth embodiment as defined above.

**[0088]** Preferably the propylene copolymer is not a wax. Accordingly, the propylene copolymer is not degraded, for instance by heating the polymer above 300°C.

**[0089]** As stated above, the benefit of the present invention can be reached over a broad range of the molecular weight. Accordingly the melt flow rate (MFR) of propylene copolymer can vary over a broad spectrum. The melt flow rate (MFR) mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined dye under specified temperature and pressure conditions and the measure of viscosity of the polymer which, in turn, for each type of polymer is mainly influenced by its molecular weight but also by its degree of branching. The melt flow rate measured under a load of 2.16 kg at 230°C (ISO 1133) is denoted as $MFR_2$. Accordingly, it is preferred that in the present invention the terpolymer has an $MFR_2$ in a range of 0.1 to 500.0 g/10 min, more preferably of 0.5 to 100.0 g/10 min, still more preferred of 1.0 to 80.0 g/10 min.

**[0090]** The molecular weight distribution (MWD) is expressed as the ratio of weight average molecular weight ($M_w$) and number average molecular weight ($M_a$). The number average molecular weight ($M_n$) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight ($M_w$) is the first moment of a plot of the weight of polymer in each molecular weight range against molecular weight.

**[0091]** The number average molecular weight ($M_n$) and the weight average molecular weight ($M_w$) as well as the molecular weight distribution (MWD) are determined by size exclusion chromatography (SEC) using Waters Alliance GPCV 2000 instrument with online viscometer. The oven temperature is 140 °C. Trichlorobenzene is used as a solvent (ISO 16014).

**[0092]** It is preferred that the propylene copolymer of the present invention has a weight average molecular weight ($M_w$) from 10,000 to 2,000,000 g/mol, more preferably from 20,000 to 1,500,000 g/mol. It is especially preferred that propylene copolymer according to this invention has a weight average molecular weight ($M_w$) of more than 50,000 g/mol like 60,000 g/moL Accordingly, it is appreciated that the propylene copolymer according to this invention has an $M_w$ of 55,000 to 2,000,000 g/mol, more preferably of 60,000 to 1,500,000 g/mol.

**[0093]** The number average molecular weight ($M_n$) of the propylene copolymer is preferably in the range of 5,000 to 750,000 g/mol, more preferably from 10,000 to 750,000 g/mol.

**[0094]** As a broad molecular weight distribution (MWD) improves the processability of the polypropylene the molecular

weight distribution (MWD) is preferably up to 20.0, more preferably up to 10.0, still more preferably up to 8.0.

**[0095]** Moreover it is preferably desired that the propylene copolymer has a rather high melting point ($T_m$) and crystallization temperature ($T_{cryst}$).

**[0096]** Thus the propylene copolymer preferably fulfils the equation (4), more preferably the equation (4a), still more preferably the equation (4b), yet more preferably the equation (4c)

$$T_m\,[°C] + 5.29 \cdot \text{comonomer}\,[\text{wt.-\%}] < 178.5 \qquad (4)$$

$$T_m\,[°C] + 5.00 \cdot \text{comonomer}\,[\text{wt.-\%}] < 178.5 \qquad (4a)$$

$$T_m\,[°C] + 4.50 \cdot \text{comonomer}\,[\text{wt.-\%}] < 178.5 \qquad (4b)$$

$$T_m\,[°C] + 4.5 \cdot \text{comonomer}\,[\text{wt.-\%}] < 178.5 \qquad (4c)$$

in case the comonomer content is equal or below 5.09 wt.-% (5.1 wt.-% for equation (4c)), or
the propylene copolymer preferably fulfils the equation (5), more preferably the equation (5a), still more preferably the equation (5b), yet more preferably the equation (5c)

$$T_m\,[°C] + 5.29 \cdot \text{comonomer}\,[\text{wt.-\%}] > 178.5 \qquad (5)$$

$$T_m\,[°C] + 5.00 \cdot \text{comonomer}\,[\text{wt.-\%}] > 178.5 \qquad (5a)$$

$$T_m\,[°C] + 4.50 \cdot \text{comonomer}\,[\text{wt.-\%}] > 178.5 \qquad (5b)$$

$$T_m\,[°C] + 4.5 \cdot \text{comonomer}\,[\text{wt.-\%}] > 178.5 \qquad (5c)$$

in case the comonomer content is more than 5.09 wt.-% (5.1 wt.-% for equation (5c)),
wherein
$T_m$ is the melting temperature and
comonomer is the weight ratio of the comonomer to the sum of monomers present in said polypropylene copolymer (comonomer / (comonomer + propylene)).

**[0097]** It is in particular preferred, that the melting point of the propylene copolymer is at least 147 °C ($T_m$), more preferably at least 155°C.

**[0098]** Alternatively or additionally it is preferred that the propylene copolymer preferably fulfils the equation (6), more preferably the equation (6a), still more preferably the equation (6b), yet more preferably the equation (6c)

$$T_{cryst}\,[°C] + 7.29 \cdot \text{comonomer}\,[\text{wt.-\%}] < 139.5 \qquad (6)$$

$$T_{cryst}\,[°C] + 7.00 \cdot \text{comonomer}\,[\text{wt.-\%}] < 139.5 \qquad (6a)$$

$$T_{cryst}\,[°C] + 6.50 \cdot \text{comonomer}\,[\text{wt.-\%}] < 139.5 \qquad (6b)$$

$$T_{cryst}\,[°C] + 6.5 \cdot \text{comonomer}\,[\text{wt.-\%}] < 139.5 \qquad (6c)$$

in case the comonomer content is equal or below 5.03 wt.-% (5.0 wt.-% for equation (6c)), or
the propylene copolymer preferably fulfils the equation 7, more preferably the equation (7a), still more preferably the equation (7b), yet more preferably the equation (7c)

$$T_{cryst}\,[°C] + 7.2857 \cdot comonomer\,[wt.\text{-}\%] > 139.5 \qquad (7)$$

$$T_{cryst}\,[°C] + 7.00 \cdot comonomer\,[wt.\text{-}\%] > 139.5 \qquad (7a)$$

$$T_{cryst}\,[°C] + 6.50 \cdot comonomer\,[wt.\text{-}\%] > 139.5 \qquad (7b)$$

$$T_{cryst}\,[°C] + 6.5 \cdot comonomer\,[wt.\text{-}\%] > 139.5 \qquad (7c)$$

in case the comonomer content is more than 5.03 wt.-% (5.0 wt.-% for equation (7c)),
wherein
$T_{cryst}$ is the crystallization temperature and
comonomer is the weight ratio of the comonomer to the sum of monomers present in said polypropylene copolymer (comonomer / (comonomer + propylene)).

**[0099]** It is in particular preferred, that the crystallization temperature ($T_{cryst}$) is at least 95 °C.

**[0100]** In addition it is appreciated that the inventive propylene copolymer has good optical properties. Thus it is preferred that propylene copolymer has a haze of not more than 40, still more preferred not more than 35 measured according to ASTM D 1003-92.

**[0101]** Preferably the above defined propylene copolymer is obtained in the presence of a specific external donor. It has been recognized that the improved propylene copolymer properties of the present invention can be in particular reached in case the propylene copolymer is produced in the presence of an ethoxy-substituted silane as external donor.

**[0102]** Preferably the external donor has the formula III

$$R'nR''mSi(OCH_2CH_3)z \qquad (III)$$

wherein

R' and R" are identical or different hydrocarbon residues,
z is 2 or 3, preferably 2
m is 0 or 1
n is 0 or 1
with the proviso that n + m +z = 4.

**[0103]** Preferably R' and R" are independently selected from the group consisting of linear aliphatic hydrocarbon group, branched aliphatic hydrocarbon group, cyclic aliphatic hydrocarbon group and aromatic group. It is in particular preferred that R' and R" are independently selected from the group consisting of methyl, ethyl, propyl, butyl, octyl, decanyl, iso-propyl, iso-butyl, iso-pentyl, tert.-butyl, tert-amyl, neopentyl, cyclopentyl, cyclohexyl, methylcyclopentyl and cycloheptyl. In a preferred embodiment the external donor has the formula IV

$$R'R''Si(OCH_2CH_3)_2 \qquad (IV)$$

wherein

R' and R" are identical or different hydrocarbon residues,
with the proviso that

(a) R' is a branched aliphatic hydrocarbon group or cyclic aliphatic hydrocarbon group, preferably selected from the group consisting of iso-propyl, iso-pentyl, tert.-butyl, tert.-amyl, neopentyl, cyclopentyl, cyclohexyl, methylcyclopentyl and cycloheptyl, and

(b) R" is selected from the group consisting of linear aliphatic hydrocarbon group, branched aliphatic hydrocarbon group and cyclic aliphatic hydrocarbon group, preferably selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

**[0104]** Accordingly it is preferred that the external donor is selected from the group consisting of diisopropyldiethoxysilane (DIPDES), cyclohexylmethyldiethoxysilane (CHMDES) and dicyclopentadienyldiethoxysilane (DCPDES). The most preferred external donor is diisopropyldiethoxysilane (DIPDES).

**[0105]** Even more referred the inventive propylene copolymer has be produced in the presence of a specific catalyst system based on Ziegler-Natta. Thus the new propylene copolymer of the instant invention is in particular obtained by the following catalyst system and process as defined below. As the selection of the catalyst system may play a decisive role when tailoring propylene copolymers, in particular when producing those copolymers as stated above the present invention is also directed to the following catalyst system.

**[0106]** Accordingly the present invention provides a catalyst system comprising

(a) a procatalyst composition comprising

(i) a transition metal compound of Group 4 to 6 of the Periodic table (IUPAC, Nomenclature of Inorganic Chemistry, 1989),
(ii) $MgCl_2$ and
(iii) an internal donor, wherein
(iv) said internal donor comprises a dialkylphthalate of formula (II)

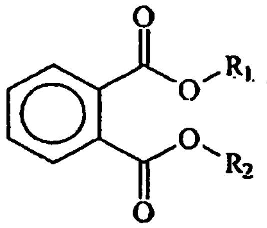

(II)

wherein $R_1$ and $R_2$ arc independently a $C_1$ or $C_2$ alkyl, i.e. methyl or ethyl, preferably $R_1$ and $R_2$ are the same $C_1$ to $C_2$ alkyl residues methyl or ethyl,

and
(b) an external donor being an cthoxy-substituted silane, preferably the external donor has the formula IV

$$R'R''Si(OCH_2CH_3)_2 \qquad (IV)$$

wherein
R' and R" are identical or different hydrocarbon residues.

**[0107]** Preferably the inventive catalyst system as defined in the previous paragraph does not comprise

(a) external donors having the formula (V)

$$R'R''Si(OCH_3)_2 \qquad (V)$$

wherein
R' and R" arc identical or different hydrocarbon residues
and/or
(b) external donors having the formula (VI)

$$R'''Si(OCH_2CH_3)_3 \qquad (VI)$$

wherein
R"' is a hydrocarbon residue.

**[0108]** Accordingly in a preferred embodiment the catalyst system of the instant invention docs not comprise propyltriethoxysilane, vinyltriethoxysilane and beta-phenylmethyldiethoxysilane.

**[0109]** It is in particular appreciated that the inventive catalyst system as defined in the instant invention comprises as an external donor only the external donor having the formula (IV) as defined above and in more detail below. Accordingly it is preferred that the catalyst system according to this invention is free of any further external donors and contains only an alkyl-diethoxysilane derivative, in particular the alkyl-diethoxysilane derivative of formula (IV) as defined in the instant invention.

**[0110]** Surprisingly it has been found that with the new catalyst system having the above defined properties propylene copolymers can be produced having superior impact resistance and brittle behaviour compared to commercially available propylene copolymers (see Figures 17 and 18). Moreover the propylene copolymers produced with the new catalyst system keep over a broad range of comonomer content at a high level their transparency in terms of haze (Figure 20). Also the melting and crystallization temperature of the propylene copolymers obtained by the new catalyst system are less influenced by the comonomer content and kept at high level (see Figures 11 to 14). Thus the new catalyst system enables to produce propylene copolymers that combine the benefit of reduced stickiness, i.e. better processability, and enhanced mechanical properties for instance in terms of improved impact resistance. Such propylene copolymers have been up to now not producible with catalyst systems known in the art (see also Figures 21 to 25). What can be in particular observed is that with the new catalyst system the incorporation of the comonomer, in particular of ethylene, leads not to a significant reduction of the melting point whereas by the use of conventional catalyst systems the melting point decreases with the inserted amount of ethylene (from 152 °C at 5 wt.-% C2 to 144 °C at 6.5 wt.-% C2). Moreover it is additionally recognized that with the new catalyst system the intrinsic viscosity of the xylene soluble fraction of the propylene copolymers is on a very low level, not exceeding 0.6 dl/min up to 6 wt.-% C2.

**[0111]** As a first requirement the catalyst system must comprise a procatalyst composition comprising a transition metal compound of Group 4 to 6 of the Periodic table (IUPAC, Nomenclature of Inorganic Chemistry, 1989), magnesium chloride ($MgCl_2$) and an internal donor.

**[0112]** The transition metal compound is preferably selected from the group consisting of titanium compound having an oxidation degree of 3 or 4, vanadium compound, chromium compound, zirconium compound, hafnium compound and rare earth metal compounds, more preferably selected from the group consisting of titanium compound, zirconium compound and hafnium compound, and most preferably the transition metal is titanium compound. Moreover the transition metal compounds are in particular transition metal halides, such as transition metal chlorides. The titanium trichloride and titanium tetrachloride are particularly preferred.

**[0113]** Moreover as stated above the procatalyst composition must comprise an internal donor, which is chemically different to the external donor of the catalytic system, i.e. the internal donor must comprise a dialkylphthalate of formula (II), wherein $R_1$ and $R_2$ can be independently selected from a $C_1$ to $C_4$ alkyl, preferably $R_1$ and $R_2$ are the same, i.e. define the same $C_1$ to $C_4$ alkyl residue. The internal donor is defined by the fact that it is included in the mixture of the transition metal compound of Group 4 to 6 of the Periodic table (IUPAC, Nomenclature of Inorganic Chemistry, 1989) and $MgCl_2$ (preferably in the presence of an alcohol) thereby redacting to the procatalyst composition, whereas the external donor is added (optionally together with the cocatalyst) to the mixture of the monomers and the procatalyst composition in the polymerisation process. Preferably the internal donor comprises a n-dialkylphthalate of formula (11), wherein $R_1$ and $R_2$ can be independently selected from a $C_1$ to $C_4$ alkyl, preferably $R_1$ and $R_2$ are the same, i.e. define the same $C_1$ to $C_4$ alkyl residue. Still more preferably the internal donor comprises n-dialkylphthalate of formula (II), wherein $R_1$ and $R_2$ can be independently selected from a $C_1$ and $C_2$ alkyl, preferably $R_1$ and $R_2$ arc the same, i.e. define the same $C_1$ or $C_2$ alkyl residue. Still more preferably the internal donor comprises diethylphthalate.

**[0114]** Of course the above defined and further below defined procatalyst composition is a solid, supported procalalyst composition.

**[0115]** Moreover it is preferred that the procatalyst composition contains not more than 2.5 wt.-% of the transition metal, preferably titanium. Still more preferably the procatalyst composition contains 1.7 to 2.5 wt.-% of the transition metal, preferably titanium. Additionally it is appreciated that the molar ratio internal donor/Mg of the procatalyst composition is between 0.03 and 0.08, still more preferably between 0.04 and 0.06, and/or its donor content is between 4 and 15 wt.%, still more preferably between 6 and 12 wt.-% and yet more preferably between 6 to 10 wt.%.

**[0116]** Furthcnnore it is preferred that the internal donor is the result of a transesterification of a dialkylphthalate of formula (I) with an alcohol. It is in particular preferred that the procatalyst composition is a procatalyst composition as produced in the patent applications WO 92/196351 (FI 88047), WO 92/19658 (FI 88048) and EP 0 491 566 A2 (FI 86886).

**[0117]** Accordingly it is preferred that the procatalyst composition is prepared by bringing together

(a) a transition metal compound of Group 4 to 6 of the Periodic table (IUPAC, Nomenclature of Inorganic Chemistry, 1989), in particular a transition metal compound as defined above, preferably a titanium compound, more preferably titanium halide like $TiCl_4$,

(b) $MgCl_2$,

(c) a $C_1$ to $C_4$ alcohol, preferably a $C_1$ to $C_2$ alcohol, like methanol or ethanol, most preferably ethanol and
(d) a dialkylphthalate of formula (I),

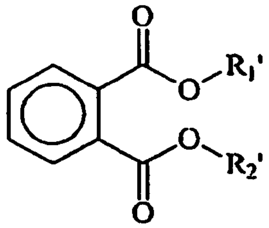

(I)

wherein $R_1$' and $R_2$' have more carbon atoms as said alcohol, preferably are independently at least a $C_5$ alkyl, like at least a $C_8$ alkyl, more preferably $R_1$' and $R_2$' are the same and are at least a $C_5$ alkyl, like at least a $C_8$ alkyl, or
preferably a n-dialkylphthalate of formula (I) wherein $R_1$' and $R_2$' have more carbon atoms as said alcohol, preferably are independently at least a $C_5$ tralkyl, like at least a $C_8$ n-allcyl, more preferably $R_1$' and $R_2$' are the same and are at least a $C_5$ n-alkyl, like at least a $C_8$ n-alkyl or
more preferably dioctylphthalate, like di-iso-octylphthalate or diethylhexylphthalate, yet more preferably diethylhexylphthalate, wherein
a transeterification between said alcohol and said dialkylphthalate of formula (I) has been carried out under suitable transesterification conditions, i.e. at a temperature between 130 to 150 °C.

**[0118]** Among others the preferred dialkylphthalate of formula (I) for the above and further down described process for the manufacture of the procatalyst composition is selected from the group consisting of propylhexyphthalate (PrHP), dioctylphthalate (DOP), di-iso-decylphthalate (DIDP), diundecylphthalate, diethylhexylphthalate and ditridecylphthalate (DTDP). The most preferred dialkylphthalate is dioctylphthalate (DOP), like di-iso-octylphthalate or diethylhexylphthalate, in particular diethylhexylphthalate.
**[0119]** Preferably at least 80 wt.-%, more preferably at least 90 wt.%, of the dialkylphthalate of formula (I) is transesterified to the dialkylphthalate of formula (II) as defined above.
**[0120]** It is particular preferred that the procatalyst composition is prepared by

(a) contacting a spray crystallised or solidified adduct of the formula $MgCl_2$*nEtOH, wherein n is 1 to 6, with $TiCl_4$ to form a titanised carrier,
(b) adding to said titanised carrier

a. a dialkylphthalate of formula (I) with $R_1$' and $R_2$' being independently at least a $C_5$ alkyl, like at least a $C_8$ alkyl, or preferably
b. a dialkylphthalate of formula (I) with $R_1$' and $R_2$' being the same and being at least a $C_5$ alkyl, like at least a $C_8$ alkyl
or more preferably
c. a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is dioctylphthalate (DOP), like di-iso-octylphthalate or diethylhexylphthalate, in particular diethylhexylphthalate,

to form a first product
(c) subjecting said first product to suitable transesterification conditions, i.e. at a temperature between 130 to 150 °C such that said ethanol is transesterified with said ester groups of said dialkylphthalate of formula (I) to form preferably at least 80 mol-%, more preferably 90 mol-%, most preferably 95 mol.%, of a dialkylphthalate of formula (II) with $R_1$ and $R_2$ being $-CH_2CH_3$, and
(d) recovering said transesterification product as the procatalyst composition.

**[0121]** As a further requirement the external donor must be carefully selected. It has been recognized that the improved propylene copolymer properties of the present invention can be only reached in case the procatalyst composition as defined above is treated with an ethoxy-substituted silane as external donor.
Preferably the external donor has the formula III

$$R'nR''mSi(OCH_2CH_3)z \qquad (III)$$

wherein

R' and R" are identical or different hydrocarbon residues,
z is 2 or 3, preferably 2
m is 0 or 1
n is 0 or 1
with the proviso that n + m +z = 4.

**[0122]** Preferably R' and R" are independently selected from the group consisting of linear aliphatic hydrocarbon group, branched aliphatic hydrocarbon group, cyclic aliphatic hydrocarbon group and aromatic group. It is in particular preferred that R' and R" are independently selected from the group consisting of methyl, ethyl, propel, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. In a preferred embodiment the external donor has the formula IV

$$R'R''Si(OCH_2CH_3)_2 \qquad (IV)$$

wherein
R' and R" are identical or different hydrocarbon residues,
with the proviso that

(a) R' is a branched aliphatic hydrocarbon group or cyclic aliphatic hydrocarbon group, preferably selected from the group consisting of iso-propyl, iso-pentyl, tert.-butyl, tert.-amyl, neopentyl, cyclopentyl, cyclohexyl, methylcyclopentyl and cycloheptyl, and
(b) R" is selected from the group consisting of linear aliphatic hydrocarbon group, branched aliphatic hydrocarbon group and cyclic aliphatic hydrocarbon group, preferably selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

**[0123]** Accordingly it is preferred that the external donor is selected from the group consisting of di-iso-propyldiethoxysilane (DIPDES), cyclohexylmethyldiethoxysilane (CHMDES) and dicyclopentadienyldiethoxysilane (DCPDES). The most preferred external donor is di-iso-propyldiethoxysilane (DIPDES)

**[0124]** Moreover the catalyst system may comprise a cocatalyst. Preferred cocatalysts are organoaluminum compounds. Accordingly it is preferred to selected the cocatalyst from the group consisting of trialkylaluminium, like triethylaluminium (TEA), dialkyl aluminium chloride and alkyl aluminium sesquichloride.

**[0125]** Especially good results are achieved with a catalyst system comprising

(a) a procatalyst composition being produced as defined in the patent applications WO 92/196351 (FI 88047), WO 92/19658 (FI 88048) and EP 0 491 566 A2 (FI 86886)
(b) an external donor being an ethoxy-substituted silane and
(c) optionally a cocatalyst.

**[0126]** Thus it is preferred that the catalyst system comprises

(a) a procatalyst composition comprising titanium, magnesium, chlorine and internal donor, wherein said internal donor comprises

(i) a dialkylphthalate of formula (II),

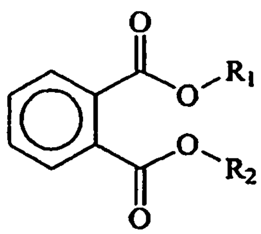

(II)

wherein $R_1$ and $R_2$ are independently selected from a $C_1$ or $C_2$ alkyl, preferably $R_1$ and $R_2$ are the same, i.e. define the same $C_1$ or $C_2$ alkyl residue,
or preferably
(ii) a n-dialkylphthalate of formula (II), wherein $R_1$ and $R_2$ can be independently selected from a $C_1$ to $C_4$ n-alkyl, preferably $R_1$ and $R_2$ are the same, i.e. define the same $C_1$ to $C_4$ n-alkyl residue
or more preferably
(iii) a n-dialkylphthalate of formula (II), wherein $R_1$ and $R_2$ can be independently selected from a $C_1$ and $C_2$ alkyl, preferably $R_1$ and $R_2$ arc the same, i.e. have the same $C_1$ or $C_2$ alkyl residue,
or still more preferably
(iv) diethylphthalate

(b) an external donor

(i) as defined by formula III,
wherein R' and R" are preferably independently selected from the group consisting of linear aliphatic hydrocarbon group, branches aliphatic hydrocarbon group, cyclic aliphatic hydrocarbon group and aromatic group, more preferably independently selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl,
or more preferably
(ii) as defined by fonnula IV (and the definition ot R' and R" thereto) or still more preferably
(iii) being selected from the group consisting of di-iso-propyldiethoxysilane (DIPDES), cyclohexylmethyldiethoxysilane (CHMDES) and decyclopentadienyldiethoxysilane (DCPDES)
or yet more preferably
(iv) being di-iso-propyldiethoxysilane (DIPDES),

and
(c) optionally a cocatalyst selected from the group consisting of trialkylaluminium, like triethylaluminium (TEA), dialkyl aluminium chloride and alkyl aluminium sesquichloride.

**[0127]** The catalyst system as defined in the previous paragraph comprises in particular as an external donor only the external donor as defined under item (b). Accordingly it is preferred that the catalyst system according to this invention is free of any further external donors and contains only an alkyl-diethoxysilane derivative, in particular the alkyl-diethoxysilane derivative as defined in item (b) of the previous paragraph.
**[0128]** Moreover the present invention is directed to the manufacture of the catalyst system wherein in first step the procatalyst composition is produced and subsequently in a second step the external donor and optionally the cocatalyst is added. The procatalyst composition is preferably produced as defined in the in the patent applications WO 92/196351 (FI 88047), WO 92/19658 (FI 88048) and EP 0 491 566 A2 (FI 86886). Accordingly it is in particular preferred that the procatalyst compostion is produced as declined above.
**[0129]** The propylene copolymer as defined in the instant invention above is preferably produced in the presence of a catalyst system as defined above. Thereby the polymerization may a single- or multistage process polymerization of propylene and comonomer such as bulk polymerization, gas phase polymerization, slurry polymerization, solution polymerization or combinations thereof using the above defined catalyst system. Preferably the process comprises also a prepolymerization with a catalyst system of the instant invention. Preferably the propylene copolymer is produced in loop reactors or in a combination of loop and gas phase reactor. Those processes arc well known to one skilled in the art
**[0130]** A slurry reactor designates any reactor, such as a continuous or simple batch stirred tank reactor or loop reactor, operating in bulk or slurry and in which the polymer forms in particulate forum. "Bulk" means a polymerization in reaction medium that comprises at least 60 wt-% monomer. According to a preferred embodiment the slurry reactor comprises a bulk loop reactor. This alternative is particularly suitable for producing bimodal propylene copolymer. By carrying out the polymerization in the different polymerization reactors in the presence of different amounts of hydrogen, the MWD of the product can be broadened and its mechanical properties and processability improved. It is also possible to use several reactors of each type, e.g. one loop reactor and two or three gas phase reactors or two loops and one gas phase reactor, in series.
**[0131]** "Gas phase reactor" means any mechanically mixed or fluid bed reactor. Preferably the gas phase reactor comprises a mechanically agitated fluid bed reactor with gas velocities of at least 0.2 miser.
**[0132]** The particularly preferred embodiment of the invention comprises carrying out the polymerization in a process comprising loop and gas phase reactors in a cascade where the loop reactor operates in liquid propylene and at high polymerization temperature. The second polymerization step is made in gas phase reactor(s) in order to broaden the

molar mass distribution of the propylene copolymer.

**[0133]** Considering the detailed information in this description, the following embodiments are especially preferred:

**[0134]** Propylene copolymer comprising monomer units of propylene and at least one other α-olefin as a comonomer, wherein

(a) the weight ratio of the comonomer to the sum of monomers present in said polypropylene copolymer (comonomer/(comonomer + propylene)) is at least 2.0 wt.-%,
(b) said propylene copolymer comprises a fraction having a lamella thickness of more than 9.0 nm,
(c) said fraction with a lamella thickness of more than 9.0 nm has a higher melt enthalpy [J/g] as each fraction with a lamella thickness below 9.0 nm, and
(d) said fractions arc determined by stepwise isothermal segregation technique (SIST).

**[0135]** A polypropylene copolymer comprising monomer units of propylene and at least one other α-olefin as a comonomer, wherein

(a) the weight ratio of the comonomer to the sum of monomers present in said polypropylene copolymer (comonomer/(comonomer + propylene)) is at least 2.0 wt.-%, and
(b) the temperature rising elution fractionation (TREF) curve of said propylene copolymer comprises at least two local maxima

(v) one absolute maximum over 100 °C, and
(vi) one relative maximum between 50 and 80 °C.

**[0136]** A polypropylene copolymer comprising monomer units of propylene and at least one other α-olefin as a comonomer, wherein

(a) the weight ratio of the comonomer to the sum of monomers present in said polypropylene copolymer (comonomer/(comonomer + propylene)) is at least 2.0 wt.-%,
(b) said propylene copolymer comprises a xylene soluble fraction (XS) of at least 2.0 wt.%, and
(c) said polypropylene copolymer fulfils the equation 2

$$IV\ (XS)\ [dl/g] - 0.3085 \cdot IV\ [dl/g] > -0.1143 \qquad (2)$$

wherein

IV (XS) is the intrinsic viscosity of the xylene soluble fraction of said polypropylene copolymer measured according DIN ISO 1628/1 and
IV is the intrinsic viscosity of the total polypropylene copolymer measured according DIN ISO 1628/1.

**[0137]** A polypropylene copolymer comprising monomer units of propylene and at least one other α-olefin as a comonomer, wherein

(a) the weight ratio of the comonomer to the sum of monomers present in said polypropylene copolymer (comonomer/(comonomer + propylene)) is at least 2.0 wt.-%,
(b) said propylene copolymer comprises a xylene soluble fraction (XS) of at least 2.0 wt.-%, and
(c) said polypropylene copolymer Fulfils the equation 3

$$IV\ (XS)\ [dl/g] + 0.0083\ MFR\ [g/10min] > 0.601 \quad (3)$$

wherein

IV (XS) is the intrinsic viscosity of the xylene soluble fraction of said polypropylene copolymer measured according DIN ISO 1628/1. and
MFR is the melt flow rate measured according to ISO 1133 at 230 °C and 2.16 kg load.

**[0138]** A polypropylene copolymer according to [0001], wherein

(a) the temperature rising elution fractionation (TREF) function of said propylene copolymer comprises at least two local maxima

(v) one absolute maximum over 100 °C, and
(vi) one relative maximum between 50 and 80 °C,

and/or
(b) said propylene copolymer

(i) comprises a xylene soluble fraction (XS) ofat least 2.0 wt.%, and
(ii) said propylene copolymer fulfils additionally the equation 2 and/or 3.

**[0139]** A polypropylene copolymer according to [0002], wherein

(a) said propylene copolymer comprises

(i) a fraction having a lamella thickness of more than 9.0 nm,
(ii) said fraction has a higher melt enthalpy [J/g] as each fraction with a lamella thickness below 9.0 nm,
(vii) said fractions are determined by stepwise isothermal segregation technique (SIST), and

and/or
(b) said propylene copolymer

(i) comprises a xylene soluble fraction (XS) of at least 2.0 wt.-%, and
(ii) said propylene copolymer fulfils additionally the equation 2 and/or 3.

**[0140]** A polypropylene copolymer according to [0003], wherein

(a) said propylene copolymer comprises

(i) a fraction having a lamella thickness of more than 9.0 nm,
(ii) said traction has a higher melt enthalpy [J/g] as each fraction with a lamella thickness below 9.0 nm,
(vii) said fractions are determined by stepwise isothermal segregation technique (SIST), and

and/or
(b) the temperatures rising elution fractionation (TREF) function of said propylene copolymer comprises at least two local maxima

(i) one absolute maximum over 100°C. and
(ii) one relative maximum between 50 and 80 °C,

and/or
(c) said propylene copolymer fulfils additionally the equation 3.

**[0141]** A polypropylene copolymer according to [0004], wherein

(a) said propylene copolymer comprises

(i) a fraction having a lamella thickness of more than 9.0 nm,
(ii) said fraction has a higher melt enthalpy [J/g] as each fraction with a lamella thickness below 9.0 nm,
(iii) said fractions are determined by stepwise isothermal segregation technique (SIST), and

and/or
(b) the temperature rising elution fractionation (TREF) function of said propylene copolymer comprises at least two local maxima

(ii) one absolute maximum over 100 °C, and
(ii) one relative maximum between 50 and 80 °C,

and/or
(c) said propylene copolymer fulfils additionally the equation 2.

**[0142]** A polypropylene copolymer according to any one of the preceding paragraphs **[0001]** to **[0008]**, wherein the $\alpha$-olefin is ethylene.
**[0143]** A polypropylene copolymer according to any one of the preceding paragraphs **[0001]** to **[0009]**, wherein the weight ratio of the $\alpha$-olefin to the sum of monomers present in said polypropylene copolymer (a-olefin/($\alpha$-olefin + propylene)) is in the range of 2.0 to 10.0 wt.-%.
**[0144]** A polypropylene copolymer according to any one of the preceding paragraphs **[0001]** to **[0010]**, wherein the xylene soluble fraction (XS) is in the range of 2.0 to 20.0 wt.-%.
**[0145]** A polypropylene copolymer according to any one of the preceding paragraphs **[0001]** to **[0011]**, wherein the fraction having a lamella thickness of more than 9.0 nm has a melt enthalpy of more than 20 J/g.
**[0146]** A polypropylene copolymer according to any one of the preceding paragraphs **[0001]** to **[0012]**, wherein each fraction having a lamella thickness below 9.0 nm has a melt enthalpy of not more than 30 J/g.
**[0147]** A polypropylene copolymer according to any one of the preceding paragraphs **[0001]** to **[0013]**, wherein each fraction having a lamella thickness in the range of 6.5 to 9.0 nm has a melt enthalpy in the range of 15 to 30 J/g.
**[0148]** A polypropylene copolymer according to any one of the preceding paragraphs **[0001]** to **[0014]**, wherein the area below the absolute maximum of the temperature rising elution fractionation (TREF) function is in the range 50 to 85 wt.-%.
**[0149]** A polypropylene copolymer according to any one of the preceding paragraphs **[0001]** to **[0015]**, wherein the area below the relative maximum between 50 and 80 °C of the temperature rising elution fractionation (TREF) curve is in the range 10 to 30 wt.-%.
**[0150]** A polypropylene copolymer according to any one of the preceding paragraphs **[0001]** to **[0016]**, wherein the absolute maximum of the temperature rising elution fractionation (TREF) curve is in the range of over 100 to 110°C.
**[0151]** A polypropylene copolymer according to any one of the preceding paragraphs **[0001]** to **[0017]**, wherein said polypropylene copolymer fulfils the equation 2a

$$IV\ (XS)\ [dl/g] - 0.3085 \cdot IV\ [dl/g] > -0.1101 \qquad (2a).$$

**[0152]** A polypropylene copolymer according to any one of the preceding paragraphs **[0001]** to **[0018]**, wherein said polypropylene copolymer fulfils the equation 3a

$$IV\ (XS)\ [dl/g] + 0.0083\ MFR > 0.601 \qquad (3a).$$

**[0153]** A polypropylene copolymer according to any one of the preceding paragraphs **[0001]** to **[0019]**, wherein the total polypropylene copolymer has intrinsic viscosity measured according DIN ISO 1628/1 of at least 1.1 dl/g.
**[0154]** A polypropylene copolymer according to any one of the preceding paragraphs **[0001]** to **[0020]**, wherein the intrinsic viscosity of the xylene soluble fraction of said polypropylene copolymer has intrinsic viscosity measured according DIN ISO 1628/1 of at least 0.4 dl/g.
**[0155]** A polypropylene copolymer according to any one of the preceding paragraphs **[0001]** to **[0021]**, wherein said polypropylene copolymer has a melt flow rate (MFR) measured according to ISO 1133 at 230 °C and 2,16 kg load in the range of 0.1 to 500 g/ 10min.
**[0156]** A polypropylene copolymer according to any one of the preceding paragraphs **[0001]** to **[0022]**, wherein

(i) said polypropylene copolymer fulfils the equation 4

$$T_m\ [°C] + 5.29 \cdot comonomer\ [wt.\text{-}\%] < 178.5 \qquad (4)$$

in case the comonomer content is equal or below 5.09 wt.-%, or
(ii) said polypropylene copolymer fulfils the equation 5

$$T_m [°C] + 5.29 \cdot comonomer [wt.-\%] > 178.5 \quad (5)$$

**in** case the comonomer content is more than 5.09 wt.-%,
wherein

$T_m$ is the melting temperature and
"comonomer" is the weight ratio of the comonomer to the sum of monomers present in said polypropylene copolymer (comonomer / (comonomer + propylene)).

**[0157]** A polypropylene copolymer according to any one of the preceding paragraphs **[0001]** to **[0023]**, wherein

(i) said polypropylene copolymer fulfils the equation 6

$$T_{cryst} [°C] + 7.29 \cdot comonomer [wt.-\%] < 139.5 \quad (6)$$

in case the comonomer content is equal or below 5.03 wt.-%, or
(ii) said polypropylene copolymer fulfils the equation 7

$$T_{cryst} [°C] + 7.2857 \cdot comonomer [wt.-\%] > 139.5 \quad (7)$$

in case the comonomer content is more than 5.03 wt.-%,
wherein

$T_{cryst}$ is the crystallization temperature and
"comonomer" is the weight ratio of the comonomer to the sum of monomers present in said polypropylene copolymer (comonomer / (comonomer + propylene)).

**[0158]** A polypropylene copolymer according to any one of the preceding paragraphs **[0001]** to **[0024]**, wherein said polypropylene copolymer has a haze below 35 % measured according to ASTM D1003-92.
**[0159]** A polypropylene copolymer according to any one of the preceding paragraphs **[0001]** to **[0025]**, wherein said polypropylene copolymer has been produced in the presence of an ethoxy-substituted silane as external donor, preferably in the presence of an external donor selected from the group consisting of diisopropyldiethoxysilane (DIPDES), cyclohexylmethyldiethoxysilane (CHMDES) and dicyclopentadienyldiethoxysilane (DCPDES).
**[0160]** A polypropylene copolymer according to any one of the preceding paragraphs **[0001]** to **[0026]**, wherein said polypropylene copolymer has been produced in the presence of a catalyst system according to any one of the claims 28 to 30.
**[0161]** Catalyst system comprising

(a) a procatalyst composition comprising

(i) a transition metal compound of Group 4 to 6 of the Periodic table (IUPAC, Nomenclature of Inorganic Chemistry, 1989),
(ii) $MgCl_2$ and
(iii) an internal donor, wherein
(iv) said internal donor comprises an dialkylphthalate of formula (II)

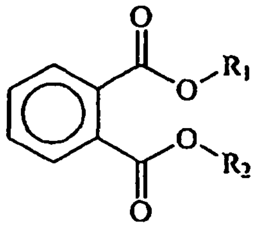 (II)

wherein $R_1$ and $R_2$ arc independently a $C_1$ or $C_2$ alkyl and

(b) an external donor having the formula IV

$$R'R''Si(OCH_2CH_3)_2 \qquad (IV)$$

wherein
R' and R" are identical or different hydrocarbon residues.

**[0162]** Catalyst system according to paragraph **[0028]**, wherein the external donor is selected from the group consisting of diisopropyldiethoxysilane (DIPDES), cyclohexylmethyldiethoxysilane (CHMDES) and dicyclopentadienyldiethoxysilane (DCPDES).

**[0163]** Catalyst system according to paragraph **[0028]** or **[0029]**, wherein the dialkylphthalate of formula (II) is a n-dialkylphthalatc of formula (II).

**[0164]** Use of the donor ethoxy-substituted silane for the manufacture of a polypropylene copolymer.

**[0165]** Use according to paragraph **[0031]**, wherein the donor is selected from the group consisting of diisopropyldiethoxysilane (DIPDES), cyclohexylmethyldiethoxysilane (CHMDES) and dicyclopentadienyldiethoxysilane (DCPDES).

**[0166]** Use according to paragraph **[0031]** or **[0032]**, wherein the polypropylene copolymer is a copolymer according to any one of the preceding paragraphs **[0001]** to **[0027]**.

**[0167]** Process of the polypropylene copolymer according to any one of the preceding paragraphs **[0001]** to **[0027]**, wherein said polypropylene copolymer has been produced in the presence of a donor as defined in the paragraph **[0031]** or paragraph **[0032]**.

The present invention will now be described in further detail by the examples provided below.

## EXAMPLES

### 1. Definitions/Measuring Methods

**[0168]** The following definitions of terms and determination methods apply for the above general description of the invention as well as to the below examples unless otherwise defined.

**[0169]** **Number average molecular weight ($M_n$), weight average molecular weight ($M_w$) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**[0170]** **$MFR_2$** is measured according to ISO 1133 (230°C, 2.16 kg load).

**[0171]** Comonomer content is measured with Fourier transform infrared spectroscopy (FTIR) calibrated with $^{13}C$-NMR. When measuring the ethylene content in polypropylene, a thin film of the sample (thickness about 250 mm) was prepared by hot-pressing. The area of $-CH_2-$ absorption peak (800-650 $cm^{-1}$) was measured with Perkin Elmer FTIR 1600 spectrometer. The method was calibrated by ethylene content data measured by $^{13}C$-NMR.

**[0172]** **Melting temperature Tm, crystallization temperature Tc, and the degree of crystallinity** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms. Also the melt- and crystallization enthalpy **(Hm and He)** were measured by the DSC method according to ISO 11357-3.

**[0173]** **Haze** is determined by ASTM D1003-92.

**[0174]** **Intrinsic viscosity** is measured according to DIN ISO 1628/1, October 1999 (in Decalin at 135 °C).

**[0175]** **The xylene solubles (XS, wt.-%):** Analysis according to the known method: 2.0 g of polymer is dissolved in 250 ml p-xylene at 135°C under agitation. After 30±2 minutes the solution is allowed to cool for 15 minutes at ambient temperature (21 °C) and then allowed to settle for 30 minutes at 25±0.5°C. The solution is filtered and evaporated in

nitrogen flow and the residue dried under vacuum at 90 °C until constant weight is reached.

$$XS\% = (100 \times m_1 \times v_0) / (m_0 \times v_1),$$

wherein

$m_0$ = initial polymer amount (g)
$m_1$ = weight of residue (g)
$v_0$ = initial volume (ml)
$V_1$ = volume of analyzed sample (ml)

**[0176]** Stepwise Isothermal Segregation Technique (SIST): The isothermal crystallisation for SIST analysis was performed in a Mettler TA820 DSC on 3±0.5 mg samples at decreasing temperatures between 200°C and 105°C. The samples were melted at 225 °C for 5 min,

then cooled with 80 °C/min to 145 °C
held for 2 hours at 145 °C,
then cooled with 80 °C/min to 135 °C
held for 2 hours at 135 °C,
then coolcd with 80 °C/min to 125 °C
held for 2 hours at 125 °C,
then cooled with 80 °C/min to 115 °C
held for 2 hours at 115 °C,
then cooled with 80 °C/min to 105 °C
held for 2 hours at 105°C.
then cooled down to -10 °C with maximal cooling rate by a compression-cooling unit.

**[0177]** The melting curve is obtained by heating the cooled sample at a heating rate of 10°C/min up to 200°C. All measurements were performed in a nitrogen atmosphere.
**[0178]** The minima of the melting curve (heat flow (endo) downwards as a function of temperature; see figures 3 and 4), i.e. the absolute minimum and the other relative minima (includes also shoulders), are converted in the respective lamella thickness according to Thomson-Gibbs equation (Eq 1.)

$$T_m = T_0\left(1 - \frac{2\sigma}{\Delta H_0 \cdot L}\right) \quad (1)$$

wherein $T_0$=457 K, $\Delta H_0$ =184x10$^6$ J/m$^3$, $\sigma$ =0.049.6 J/m$^2$, L is the lamella thickness and $T_m$ is the measured temperature (K). Such obtained lamella thicknesses define the fractions of each polymer sample (compare table 4).
**[0179]** The melt enthalpy [J/g] of each fraction of the polymer sample as defined above is obtained as follows:

In general the melt enthalpy is calculated from the quotient of the heat flow volume and initial weight of the sample. The heat flow volume is recorded as function of temperature, i.e. the melting curve (see figures 3 and 4). The area above each minimum (includes also shoulders) of the melting curve represents its melt enthalpy. The integration limits for each area to be calculated are defined by relative maxima (includes also shoulders) and by the intersection points of the base line with the melting curve, in the direct neighborhood of each minimum of the melting curve.

**[0180]** The maxima, minima, shoulders of the melting curve as well as the areas are determined as known from DSC-curves.
**[0181]** Accordingly the relative maxima may be mathematically understood, i.e. a point $x^*$ is a relative maximum of a function $f$ if there exists some $e > 0$ such that $f(x^*) \geq f(x)$ for all $x$ with $|x-x^*| < \varepsilon$. Furthermore, in case of shoulders, the first derivative of the function (the measured melting curve) must lead to a relative maximum at the relative maximum of said function. Excluded are those inflection points that are located between two relative extrema.
**[0182]** **Flexural modulus** is measured according to **ISO 178**
**[0183]** **Charpy impact strength** is measured according ISO 179 at 23 °C and ISO 179-2 in the temperature range

of 0 - 20 °C.

**Temperature Rising Elution Fractionation (TREF):**

**[0184]** The chemical composition distribution was determined by analytical Temperature Rising Elution Fractionation (a-TREF) as described in J.B.P. Soares, A.E. Hamielec; Temperature rising elution fractionation of linear polyolefins; Polymer 1995, 36 (8), 1639-1654 and Soares, J.B.P., Fractionation, In: Encyclopedia Of Polymer Science and Technology, John Wiley & Sons, New York, pp. 75-131, Vol. 10, 2001. The separation of the polymer in a-TREF is according to crystallinity. The TREF profiles were generated using a CRYSTAF-TREF 200+ instrument manufactured by PolymerChar S.A. (Valencia, Spain). The experimental procedure, as described in N. Aust, M. Gahleitner, K. Reichelt, B. Raninger; Optimization of run parameters of temperature-rising elution fractionation with the aid of a factorial design experiment; Polymer Testing 2006, 25 (7), 896-903 was as follows:

In the dissolution step, the polymer sample was dissolved in 1,2,4-trichlorobenzene (TCB, 2 to 4 mg/mL, stabilized with 300 mg/L 2,6-Di tert butyl-4-methyl-phenol) in one of the vessels at a concentration of 4 mg/mL at 160 °C for 90 min. The sample was then loaded into the TREF column (7.8 mm inner diameter, 15 cm length, packed with stainless steal shots as inert support), and held at 110 °C for 30 min for stabilization. The polymer sample was crystallized and precipitated onto the support inside the TREF column by a slow reduction of the temperature to 30 °C under a constant cooling rate (0.1 °C/min). The column temperature was kept at 30 °C for 25 min for stabilization before the elution step started. In the elution step, a solvent (TCB) flowed through the column at a constant flow rate of 0.5 mL/min while the temperature in the column was first held for 10 min at 30 °C to measure the remaining soluble fraction followed by slowly increasing the temperature to 130 °C at a constant heating rate (0.5 °C/min). The concentration of the polymer being eluted was measured during the whole elution step with an infrared detector (measuring the C-H absorption at 3.5 microns wavelength) and recorded together with the temperature in the column oven as a function of time.

**[0185]** The concentration signal was plotted as a function of the elution temperature (TREF profile). For convenience the under isothermal conditions (30 °C, 10 min) measured soluble fraction was added to this plot by converting the time into temperature using the constant heating rate of 0.5 °C/min. In the TREF calculation software (by Polymer Char, version 07a) the concentration plot (TREF profile) was normalized including the soluble fraction.

**EXAMPLES**

**Example 1**: DIPDES; MFR 10 g/10 min ; C2 content 6.5 wt.-% (Inventive)

**[0186]** The propylene polymers used for the present invention were prepared according to the following procedure:

**Raw Materials**:

**[0187]**

- Hexane dried over molecular sieve (3/10A)
- TEAL: 93 % from Sigma-Aldrich
- Donor: Diisopropyldiethoxisilane ex Wacker Chemic (Manufacture of the donor is described in DE 38 21 483 A1)
- $N_2$: supplier AGA, quality 5.0; purification with catalyst BASF R0311, catalyst G132 (CuO/ZNO/C), molecular sieves (3/10A) and $P_2O_5$.
- hydrogen: supplier AGA, quality 6.0
- Propylene: supplier Borealis
- Ethylene: supplier Air Liquide 3.5
- The catalyst Polytrack 8502 is commercially available from Grace.
- Sandostab P-EPQ is an antioxidant and commercially available from Clariant
- Millad 3988 is a nucleating agent and commercially available from Milliken
- Irganox B215 is a blend of antioxidants, commercially available from Ciba
- Calziumstearat S is an acid scavenger and commercially available from Faci.
- Ionol CP is an antioxidant and commercially available from Degussa.

The monomers used were additionally purified via BASF catalyst R3-11 (Cu), GIRDLER catalyst (CuO/ZnO) and molecular sieves 4 and 10 A.

Preparation:

**[0188]** A 20 1 autoclave reactor has been purified by mechanical cleaning, washing with hexane and heating under vacuum/$N_2$ cycles at 160 °C. After testing for leaks with 30 bar $N_2$ over night the reactor has been vacuumed and filled with 5350 g propylenc by weighing and 18 nl $H_2$ by pressure monitoring from a 50 l steel cylinder. 35 mg of Polytrack 8502-catalyst are activated for 10 minutes with a mixture of Triethylaluminium (TEAl; solution in hexane 1 mol/l) and Di-iso-propyldiethoxysilane as donor (0.3 mol/l in hcxanc) - in a molar ratio of 10 after a contact time of 5 min - and 10 ml hexane in a catalyst feeder. The molar ratio of TEAl and Ti of catalyst is 250. After activation the catalyst is spilled with 250 g propylene into the stirred reactor with a temperature of 23 °C. Stirring speed is hold at 250 rpm. After 6 min prepolymerisation at 23 °C temperature is increased to 70 °C in about 16 min. After holding that temperature for 1 hour and feeding constantly 1968mln/min ethylene into the reactor polymerisation is stopped by flashing propylene and cooling to room temperature.
The amount of polymer powder was 1654 g and the MFR (230 °C, 2.16 kg) of the powder was 10 g/10 min, C2 content was 6.5 wt.-%.
After spilling the reactor with $N_2$ the polymer powder is transferred to a steel container.
100g powder, used for characterization, was stabilized with 0. 1 wt.-% of Sandostab P-EPQ and 0.2 wt.-% of Ionol CP in acetone and dried over night in a hood and additionally for 2 hours at 50 °C under vacuum.
For mechanical testing reactor product was pelletised via TSE16 extruder (PRISM) and additivated with 0.15 wt.-% Irganox B225 and 0.05 wt.-% Ca-stearate. All samples have been nucleated with 0.2% 1.3:2.4-bis(3,4-dimethylbenzylidene)sorbitol.

**Example 2:** DCPDMS; MFR 9 g/10 min ; C2 content 6.5 wt.-% (Inventive)

**[0189]** The propylene polymers used for the present invention were prepared according to the following procedure:

Raw Materials:

**[0190]**

- Hexane dried over molecular sieve (3/10A)
- TEAL: 93 % from Sigma-Aldrich
- Donor: Di-iso-propyldiethoxisilane ex Wacker Chemie (Manufacture of the donor is described in DE 38 21 483 A1)
- $N_2$: supplier AGA, quality 5.0; purification with catalyst BASF R0311, catalyst G 132 (CuO/ZNO/C), molecular sieves (3/10A) and $P_2O_5$.
- Hydrogen: supplier AGA, quality 6.0
- Propylene: supplier Borealis
- Ethylene: supplier Air Liquido 3.5
- The catalyst Polytrack 8502 is commercially available from Grace.
- Sandostab P-EPQ is an antioxidant and commercially available from Clariant
- Millad 3988 is a nucleating agent and commercially available from Milliken
- Irganox B215 is a blend of antioxidants, commercially available from Ciba
- Calziumstearat S is an acid scavenger and commercially available from Faci.
- Ionol CP is an antioxidant and commercially available from Degussa.

The monomers used were additionally purified via BASF catalyst R3-11 (Cu), GIRDLER catalyst (CuO/ZnO) and molecular sieves 4 and 10 Å.

Preparation:

**[0191]** A 20 l autoclave reactor has been purified by mechanical cleaning, washing with hcxanc and heating under vacuum/$N_2$ cycles at 160 °C. After testing for leaks with 30 bar $N_2$ over night the reactor has been vacuumed and filled with 5350 g propylene by weighing and 88 nl $H_2$ by pressure monitoring from a 50 l steel cylinder. 35 mg of Polytrack 8502-catalyst are activated for 10 minutes with a mixture of Triethylaluminium (TEAl; solution in hexane I mol/l) and Dicyclopentyldimethoxysilane as donor (0.3 mol/l in hexane) - in a molar ratio of 10 after a contact time of 5 min - and 10 ml hexane in a catalyst feeder. The molar ratio of TEAl and Ti of catalyst is 250. After activation the catalyst is spilled with 250 g propylene into the stirred reactor with a temperature of 23 °C. Stirring speed is hold at 250 rpm. After 6 min prepolymerisation at 23 °C temperature is increased to 70 °C in about 16 min. After holding that temperature for 1 hour and feeding constantly 3668mln/min ethylene into the reactor polymerisation is stopped by flashing propylene and cooling

to room temperature.
The amount of polymer powder was 2884 g and the MFR (230 °C, 2.16 kg) of the powder was 9 g/10 min, C2 content was 6.5 wt.-%.
After spilling the reactor with $N_2$ the polymer powder is transferred to a steel container.
100g powder, used for characterization, was stabilized with 0.1 wt.-% of Sandostab P-EPQ and 0.2 wt.-% of Ionol CP in acetone and dried over night in a hood and additionally for 2 hours at 50 °C under vacuum.
For mechanical testing reactor product was pelletised via TSE16 extruder (PRISM) and additivated with 0.15 wt.-% Irganox B225 and 0.05 wt.-% Ca-stearate. All samples have been nucleated with 0.2% 1,3:2,4-bis(3,4-dimethylbenzylidene)sorbitol.

**Example 3**: DIPDES; MFR 11 g/10 min ; C2 content 4.5 wt.-% (Inventive)

**[0192]** The propylene polymers used for the present invention were prepared according to the following procedure:

Raw Materials:

**[0193]**

- Hexane dried over molecular sieve (3/10A)
- TEAL: 93 % from Sigma-Aldrich
- Donor: Di-iso-propyldiethoxisilane ex Wacker Chemic (Manufacture of the donor is described in DE 38 21 483 A1)
- $N_2$: supplier AGA, quality 5.0; purification with catalyst BASF R0311, catalyst G 132 (CuO/ZNO/C), molecular sieves (3/10A) and $P_2O_5$.
- Hydrogen: supplier AGA, quality 6.0
- Propylene: supplier Borealis
- Ethylene: supplier Air Liquide 3.5
- The catalyst Polytrack 8502 is commercially available from Grace.
- Sandostab P-EPQ is an antioxidant and commercially available from Clariant
- Millad 3988 is a nucleating agent and commercially available from Milliken
- Irganox B215 is a blend of antioxidants, commercially available from Ciba
- Calziumstearat S is an acid scavenger and commercially available from Faci.
- Ionol CP is an antioxidant and commercially available from Degussa.

The monomers used were additionally purified via BASF catalyst R3-11 (Cu), GIRDLER catalyst (CuO/ZnO) and molecular sieves 4 and 10 A.

Preparation:

**[0194]** A 20 l autoclave reactor has been purified by mechanical cleaning, washing with hexane and heating under vacuum/$N_2$ cycles at 160 °C. After testing for leaks with 30 bar $N_2$ over night the reactor has been vacuumed and filled with 5350 g propylene by weighing and 16 nl $H_2$ by pressure monitoring from a 50 l steel cylinder. 35 mg of Polytrack 8502-catalyst are activated for 10 minutes with a mixture of Triethylaluminium (TEAl; solution in hexane 1 mol/l) and Di-iso-propyldiethoxysilane as donor (0.3 mol/l in hexane) - in a molar ratio of 10 after a contact time of 5 min - and 10 ml hexane in a catalyst feeder. The molar ratio of TEAl and Ti of catalyst is 250. After activation the catalyst is spilled with 250 g propylene into the stirred reactor with a temperature of 23 °C. Stirring speed is hold at 250 rpm. After 6 min prepolymerisation at 23 °C temperature is increased to 70 °C in about 16 min. After holding that temperature for 1 hour and feeding constantly 880mln/min ethylene into the reactor polymerisation is stopped by flashing propylene and cooling to room temperature.
The amount of polymer powder was 1474 g and the MFR (230 °C, 2.16 kg) of the powder was 11 g/10 min, C2 content was 4.5 wt.-%.
After spilling the reactor with $N_2$ the polymer powder is transferred to a steel container.
100g powder, used for characterization, was stabilized with 0.1 wt.-% of Sandostab P-EPQ and 0.2 wt.-% of Ionol CP in acetone and dried over night in a hood and additionally for 2 hours at 50 °C under vacuum.
For mechanical testing reactor product was pelletised via TSE16 extruder (PRISM) and additivated with 0.15 wt.-% Irganox B225 and 0.05 wt.-% Ca-stearate. All samples have been nucleated with 0.2% 1,3:2,4-bis(3,4-dimethylbenzylidene)sorbitol.

**Example 4**: DCPDMS; MFR 11 g/10 min ; C2 content 4.5 wt.-% (Comparison)

**[0195]** The propylene polymers used for the present invention were prepared according to the following procedure:

Raw Materials:

**[0196]**

- Hexane dried over molecular sieve (3/1 0A)
- TEAL: 93 % from Sigma-Aldrich
- Donor: Dicyclopentyldimethoxysilane DCPDMS ex Wacker Chemie (commercially available)
- $N_2$: supplier AGA, quality 5.0; purification with catalyst BASF R0311, catalyst G132 (CuO/ZNO/C), molecular sieves (3/10A) and $P_2O_5$.
- Hydrogen: supplier AGA, quality 6.0
- Propylene: supplier Borealis
- Ethylene: supplier Air Liquide 3.5
- The catalyst Polytrack 8502 is commercially available from Grace.
- Sandostab P-EPQ is an antioxidant and commercially available from Clariant
- Millad 3988 is a nucleating agent and commercially available from Milliken
- Irganox B215 is a blend of antioxidants, commercially available from Ciba
- Calziumstearat S is an acid scavenger and commercially available from Faci.
- Ionol CP is an antioxidant and commercially available from Degussa.

The monomers used were additionally purified via BASF catalyst R3-11 (Cu), GIRDLER catalyst (CuO/ZnO) and molecular sieves 4 and 10 Å.

Preparation:

**[0197]** A 201 autoclave reactor has been purified by mechanical cleaving, washing with hexane and heating under vacuum/$N_2$ cycles at 160 °C. After testing for leaks with 30 bar $N_2$ over night the reactor has been vacuumed and filled with 5350 g propylene by weighing and 80 nl $H_2$ by pressure monitoring from a 50 1 steel cylinder. 35 mg of Polytrack 8502-catalyst are activated for 10 minutes with a mixture of Triethylaluminium (TEAl; solution in hexane 1 mol/l) and Dicyclopentyldimethoxysilane as donor (0.3 mol/l in hexane) - in a molar ratio of 10 after a contact time of 5 min - and 10 ml hexane in a catalyst feeder. The molar ratio of TEAl and Ti of catalyst is 250. After activation the catalyst is spilled with 250 g propylene into the stirred reactor with a temperature of 23 °C. Stirring speed is hold at 250 rpm. After 6 min prepolymerisation at 23 °C temperature is increased to 70 °C in about 16 min. After holding that temperature for 1 hour and feeding constantly 1612mln/min ethylene into the reactor polymerisation is stopped by flashing propylene and cooling to room temperature.
The amount of polymer powder was 2313 g and the MFR (230 °C, 2.16 kg) of the powder was 11 g/10 min, C2 content was 4.5 wt.%.
After spilling the reactor with $N_2$ the polymer powder is transferred to a steel container.
100g powder, used for characterization, was stabilized with 0.1 wt.-% of Sandostab P-EPQ and 0.2 wt.-% of Ionol CP in acetone and dried over night in a hood and additionally for 2 hours at 50 °C under vacuum.
For mechanical testing reactor product was pelletised via TSE16 extruder (PRISM) and additivated with 0.15 wt.-% Irganox B225 and 0.05 wt.-% Ca-stearate. All samples have been nucleated with 0.2% 1,3:2,4-bis(3,4-dimethylbenzylidene)sorbitol.
All other examples given in the tables (inventive and comparison examples) can be analogous obtained by changing the hydrogen content and the ethylene feed as well as the external donor in known manner.
The donors used have the following abrevations:

| | |
|---|---|
| DIPDES | Di-iso-propydiethoxysilane |
| DIPDMS | Di-iso-propydimethoxysilane |
| DCPDES | Dicyclopentyldiethoxysilane |
| DCPDMS | Dicyclopentyldimethoxysilane |
| CHMDES | Cyclohexyldiethoxysilane |
| CHMDMS | Cyclohexyldimethoxysilane |
| IPTES | Iso-propyltriethoxysilane |

**Table 1:** Intrinsic viscosity

| | IV dl/g | MFR g/10min | IV (XS) dl/g |
|---|---|---|---|
| DCPDMS | 2.6 | 1.8 | 0.6 |
| | 2.2 | 4.9 | 0.5 |
| | 1.9 | 7.9 | 0.4 |
| | 1.8 | 9.5 | 0.4 |
| | 1.8 | 10.7 | 0.43 |
| | 1.8 | 12.6 | 0.3 |
| | 1.7 | 13.5 | 0.4 |
| | 1.7 | 13.5 | 0.3 |
| | 1.8 | 13.8 | 0.4 |
| | 1.7 | 15.9 | 0.3 |
| | 1.6 | 20.4 | 0.3 |
| | 1.4 | 34.3 | 0.2 |
| | 1.4 | 38.1 | 0.2 |
| DIPDES | 4.3 | 0.2 | 2.7 |
| | 2.3 | 3.3 | 1.4 |
| | 2.1 | 4.9 | 1.0 |
| | 1.9 | 10.8 | 1.2 |
| | 1.8 | 12.4 | 1.1 |
| | 1.8 | 12.6 | 0.7 |
| | 1.8 | 13.8 | 0.8 |
| | 1.6 | 16.1 | 1.0 |
| | 1.7 | 16.9 | 0.7 |
| | 1.6 | 17.4 | 0.9 |
| | 1.6 | 18.5 | 0.6 |
| | 1.6 | 19.5 | 0.8 |
| | 1.6 | 23.6 | 0.6 |
| | 1.3 | 41.0 | 0.6 |
| | 1.3 | 54.2 | 0.4 |

**Table 2:** Values with regard to the Figures 11 to 17. 19 and 20

| **Donor** | **XS total** [wt.-%] | **C2 content** [w.-%] | **Tm** [°C] | **Tc** [°C] | **IV (XS)** [dl/g] | **Haze** [%] | **Flex modulus** [Mpa] | **Impact at 23°C** [kJ/m$^2$] |
|---|---|---|---|---|---|---|---|---|
| DCPDMS | 5.5 | 3.5 | | | 0.3 | 26.7 | 1143 | 5.6 |
| DCPDMS | 6.3 | 4.5 | | | 0.4 | 24.3 | 1022.7 | 5.8 |
| DCPDMS | 7.1 | 5 | 152 | 103 | 0.4 | 23.7 | 952.5 | 6.3. |
| DCPDMS | 8.6 | | 147 | 96 | 0.6 | 21.9 | 748.5 | 8.5 |
| DCPDMS | 15.0 | 6.5 | 144 | 92 | 1.1 | 21.8 | 520.4 | 19.7 |
| DIPDES | 9.6 | 3.5 | | | 0.7 | 31.2 | 935.1 | 7.7 |
| DIPDES | 12.3 | 4.5 | | | 08 | 26.1 | 817 | 8.6 |
| DIPDES | 12.4 | 5 | 152 | 103 | 0.7 | 23.5 | 775.5 | 8.2 |
| DIPDES | 15.7 | 6 | 149 | 100 | 1.1 | 27.4 | 573.8 | 25.4 |
| DIPDES | 20. | 6.5 | 149 | 99 | 1.2 | 28 | 515 | 30.8 |

**Table 3:** Values with regard to Figure 18

| **Temperature [°C]** | **Charpy Impact Strength [kJ/m$^2$] DCPDMS** | **Charpy Impact Strength [kJ/m$^2$] DIPDES** |
|---|---|---|
| 0 | 8.9 | 9.9 |

(continued)

| Temperature [°C] | Charpy Impact Strength [kJ/m$^2$] DCPDMS | Charpy Impact Strength [kJ/m$^2$] DIPDES |
|---|---|---|
| 2 | 9.7 | 10.6 |
| 4 | 9.4 | 11.8 |
| 6 | 9.0 | 15.5 |
| 8 | 10.7 | 24.4 |
| 10 | 11.7 | 24.7 |
| 12 | 13.6 | 26.6 |
| 14 | 16.3 | 27.6 |
| 16 | 17.0 | 27.3 |
| 18 | 17.2 | 27.8 |
| 20 | 17.6 | 27.4 |

**Table 4: SIST values**

| C2 content | Donor | Tm1 | ΔHM1 | Lc1 | Tm2 | ΔHM2 | Lc2 | TM3 | ΔHM3 | Lc3 |
|---|---|---|---|---|---|---|---|---|---|---|
| [wt%] | | [°C] | [J/g] | [nm] | [°C] | [J/g] | [nm] | [°C] | [J/g] | [nm] |
| 3.5 | DCPDMS | 153.5 | 31.5 | 11.1 | 141.1 | 45.1 | 7.9 | 127.0 | 8.0 | 5.9 |
| 5 | DCPDMS | 152.0 | 29.0 | 10.6 | 139.0 | 38.0 | 7.5 | 126.0 | 9.2 | 5.8 |
| 6 | DCPDMS | 145.6 | 16.7 | 8.8 | 137.7 | 22.3 | 7.3 | 128.0 | 18.0 | 6.0 |
| 6.5 | DCPDMS | 142.4 | 12.7 | 8.1 | 128.5 | 26.1 | 6.1 | 115.0 | 8.3 | 4.9 |
| 3.5 | DIPDES | 154.7 | 37.2 | 11.5 | 147.3 | 16.0 | 9.2 | 139.9 | 16.3 | 7.7 |
| 5 | DIPDES | 150.0 | 32.0 | 9.9 | 139.0 | 29.0 | 7.5 | 124.0 | 9.1 | 5.6 |
| 6 | DIPDES | 149.8 | 23.3 | 9.9 | 138.1 | 21.3 | 7.4 | 124.8 | 8.5 | 5.7 |
| 6.5 | DIPDES | 149.3 | 21.9 | 9.7 | 137.2 | 19.8 | 7.2 | 124.6 | 9.7 | 5.7 |

| C2 content | Donor | Tm4 | ΔHM4 | Lc4 | Tm5 | ΔHM5 | Lc5 |
|---|---|---|---|---|---|---|---|
| [wt%] | | [°C] | [J/g] | [nm] | [°C] | [J/g] | [nm] |
| 3.5 | DCPDMS | 118.0 | 5.1 | 5.1 | 96.6 | 9.9 | 3.9 |
| 5 | DCPDMS | 115.0 | 4.9 | 4.9 | 101.0 | 6.3 | 4.1 |
| 6 | DCPDMS | 115.7 | 6.5 | 5.0 | 99.3 | 10.6 | 4.0 |
| 6.5 | DCPDMS | 97.5 | 19.6 | 3.9 | | | |
| 3.5 | DIPDES | 115.0 | 3.2 | 4.9 | 91.1 | 4.3 | 3.6 |
| 5 | DIPDES | 114.0 | 5.3 | 4.8 | 99.6 | 10.9 | 4.0 |
| 6 | DIPDES | 114.2 | 4.8 | 4.8 | 97.8 | 8.4 | 3.9 |
| 6.5 | DIPDES | 114.1 | 6.5 | 4.8 | 96.0 | 15.2 | 3.8 |

**Table 5:** Values for figure 21

| Donor | XS total [wt%] | IR C2 tot [mol%] | MFR [g/10min 2.1kg] |
|---|---|---|---|
| CHMDES | 17.3 | 7.9 | 2.4 |
| CHMDES | 20.7 | 8.4 | 293 |
| IPTES | 10.5 | 6.1 | 0.7 |
| IPTES | 20.3 | 8.5 | 87.6 |
| DCPDES | 26.0 | 10.4 | 0.2 |
| DCPDES | 8.4 | 4 | 74 |
| DIPDES | 13.4 | 6.4 | 0.7 |
| DIPDES | 27.0 | 9.6 | 91.5 |
| CHMDES | 10.4 | 4.9 | 391 |
| CHMDES | 37.3 | 16.1 | 1.0 |
| IPTES | 8.9 | 5.1 | 129 |
| IPTES | 36.3 | 14.6 | 0.3 |
| DCPDES | 15.6 | 9 | 45 |
| DCPDES | 12.5 | 6.5 | 0.7 |
| DIPDES | 10.5 | 4.6 | 137 |
| DIPDES | 33.4 | 13.6 | 0.3 |
| CHMDMS | 12.3 | 10.8 | 0.2 |
| CHMDMS | 4.8 | 3.6 | 41.7 |
| DCPDMS | 10.0 | 7.8 | 0.1 |
| DCPDMS | 3.5 | 3.2 | 16 |
| DIPDMS | 6.3 | 4.6 | 0.2 |
| DIPDMS | 9.1 | 7.3 | 31 |
| DIPDMS | 6.3 | 5.5 | 8 |
| CHMDMS | 13.3 | 8.2 | 27 |
| CHMDMS | 6.5 | 4.8 | 0.4 |
| DCPDMS | 9.0 | 8.2 | 9 |
| DCPDMS | 5.2 | 4.4 | 0.1 |
| DIPDMS | 5.7 | 4.3 | 41 |
| DIPDMS | 13.0 | 9.8 | 0.1 |
| CHMDMS | 8.4 | 6.4 | 12 |

**Table 6:** Values for figures 22 and 23

| Donor | MFR [g/10min 2.1kg] | $IV_{xs}$ [ml/g] | C2 content [mol%] |
|---|---|---|---|
| CHMDES | 293.5 | 59.8 | 8.4 |
| IPTES | 0.8 | 235.9 | 6.1 |
| IPTES | 87.6 | 81.1 | 8.5 |
| DCPDES | 0.2 | 367.6 | 10.4 |
| DCPDES | 74.0 | 40.0 | 4.0 |
| DIPDES | 0.7 | 240.2 | 6.4 |
| DIPDES | 91.5 | 89.2 | 9.6 |
| CHMDES | 390.8 | 57.7 | 4.9 |
| CHMDES | 1.0 | 310.9 | 16.1 |
| IPTES | 129.0 | 44.8 | 5.1 |
| IPTES | 0.3 | 311.5 | 14.6 |
| DCPDES | 45.1 | 74.4 | 9.0 |
| DCPDES | 0.7 | 232.1 | 6.5 |
| DIPDES | 136.8 | 46.8 | 4.6 |
| DIPDES | 0.3 | 362.3 | 13.6 |

(continued)

| Donor | MFR [g/10min 2.1kg] | $IV_{xs}$ [ml/g] | C2 content [mol%] |
|---|---|---|---|
| CHMDMS | 0.2 | 349.3 | 10.8 |
| CHMDMS | 41.8 | 34.2 | 3.6 |
| DCPDMS | 0.1 | 355.8 | 7.8 |
| DCPDMS | 16.0 | 33.7 | 3.2 |
| DIPDMS | 0.2 | 216.0 | 4.6 |
| DIPDMS | 30.9 | 77.4 | 7.3 |
| DIPDMS | 7.9 | 58.8 | 5.5 |
| CHMDMS | 26.6 | 144.6 | 8.2 |
| CHMDMS | 0.4 | 208.7 | 4.8 |
| DCPDMS | 9.6 | 72.3 | 8.2 |
| DCPDMS | 0.1 | 219.1 | 4.4 |
| DIPDMS | 41.2 | 35.5 | 4.3 |
| DIPDMS | 0.1 | 389.4 | 9.8 |
| CHMDMS | 11.3 | 67.4 | 6.6 |

**Table 7:** Values for figure 24

| Donor | IV [ml/g] | IV (XS) [ml/g] | MFR [g/10min 2.1kg] | C2 content [mol%] |
|---|---|---|---|---|
| CHMDES | 275.6 | 220.0 | 2.4 | 7.9 |
| CHMDES | 88.3 | 59.8 | 293 | 8.4 |
| IPTES | 359.4 | 235.9 | 0.75 | 6.1 |
| IPTES | 114.2 | 81.1 | 87.6 | 8.5 |
| DCPDES | 430.9 | 367.6 | 0.23 | 10.4 |
| DCPDES | 121.2 | 40.0 | 74 | 4 |
| DIPDES | 366.3 | 240.2 | 0.69 | 6.4 |
| DIPDES | 119.5 | 89.2 | 91.5 | 9.6 |
| CHMDES | 83.9 | 57.7 | 391 | 4.9 |
| CHMDES | 308.0 | 310.9 | 0.97 | 16.1 |
| IPTES | 107.1 | 44.8 | 129 | 5.1 |
| IPTES | 440.1 | 311.5 | 0.27 | 14.6 |
| DCPDES | 130.6 | 74.4 | 45 | 9 |
| DCPDES | 355.7 | 232.1 | 0.68 | 6.5 |
| DIPDES | 105.4 | 46.8 | 137 | 4.6 |
| DIPDES | 411.5 | 362.3 | 0.3 | 13.6 |
| CHMDMS | 422.7 | 349.3 | 0.24 | 10.8 |
| CHMDMS | 137.6 | 34.2 | 41.7 | 3.6 |
| DCPDMS | 568.5 | 355.8 | 0.08 | 7.8 |
| DCPDMS | 171.3 | 33.7 | 16 | 3.2 |
| DIPDMS | 483.1 | 216.0 | 0.17 | 4.6 |
| DIPDMS | 145.1 | 77.4 | 31 | 7.3 |
| DIPDMS | 193.6 | 58.8 | 8 | 5.5 |
| CHMDMS | 155.0 | 144.6 | 27 | 8.2 |
| CHMDMS | 390.0 | 208.7 | 0.4 | 4.8 |
| DCPDMS | 191.0 | 72.3 | 9 | 8.2 |
| DCPDMS | 488.2 | 219.1 | 0.14 | 4.4 |
| DIPDMS | 139.6 | 35.5 | 41 | 4.3 |
| DIPDMS | 537.7 | 389.4 | 0.1 | 9.8 |
| CHMDMS | 180.5 | 72.4 | 12 | 6.4 |

**Table 8:** Values for figure 25

| C2 tot [mol%] | C2 random [mol%] | C2 block [mol%] | MFR [g/10min 2.1kg] |
|---|---|---|---|
| 17.1 | 7.9 | 9.2 | 0.97 |
| 12.1 | 6.4 | 5.7 | 293 |
| 13.4 | 6.4 | 7 | 0.23 |
| 10.4 | 5.5 | 4.9 | 45.1 |
| 15.2 | 7.6 | 7.6 | 0.3 |
| 12.8 | 6.8 | 6 | 91.5 |
| 16.2 | 8.1 | 8.1 | 0.3 |
| 10.9 | 6.1 | 4.8 | 87.6 |
| 10.6 | 5.1 | 5.5 | 0.24 |
| 9.4 | 4.9 | 4.5 | 26.6 |
| 10.6 | 5.1 | 5.5 | 0.08 |
| 8.9 | 4.7 | 4.2 | 9.5 |
| 11.7 | 5.7 | 6 | 0.1 |
| 9 | 4.6 | 4.4 | 31 |

**Table 9:** Values for figures 5 and 6

| Donor | MFR [g/ 10min 2.1kg] | C2 [wt%] | peak1 [°C] | area1 [wt%] | peak2 [°C] | area2 [wt%] | peak3 [°C] | area3 [wl%] |
|---|---|---|---|---|---|---|---|---|
| DCPDMS | 10 | 5 | 104.2 | 93.7 | 0.0 | 0.0 | 0.6 | 0.0 |
| DCPDMS | 10 | 6 | 99.2 | 93.3 | 0.0 | 0.0 | 0.0 | 0.0 |
| DCPDMS | 10 | 6.5 | 96.0 | 86.8 | 0.0 | 0.0 | 0.0 | 0.0 |
| DIPDES | 10 | 5 | 104.1 | 78.2 | 72.3 | 2.4 | 67.5 | 9.5 |
| DIPDES | 10 | 6 | 103.0 | 67.5 | 75.5 | 16.4 | 0.0 | 0.0 |
| DIPDES | 10 | 6.5 | 100.8 | 56.0 | 79.9 | 0.6 | 78.9 | 22.3 |

## Claims

**1.** Propylene copolymer comprising monomer units of propylene and at least one other α-olefin as a comonomer, wherein

(a) the weight ratio of the comonomer to the sum of monomers present in said polypropylene copolymer (comonomer/(comonomer + propylene)) is at least 2.0 wt.%,
(b) said propylene copolymer comprises a fraction having a lamella thickness of more than 9.0 nm,
(c) said fraction with a lamella thickness of more than 9.0 nm has a higher melt enthalpy [J/g] as each fraction with a lamella thickness below 9.0 nm, and
(d) said fractions are determined by stepwise isothermal segregation technique (SIST) as defined in the example section.

**2.** A polypropylene copolymer comprising monomer units of propylene and at least one other α-olefin as a comonomer, wherein

(a) the weight ratio of the comonomer to the sum of monomers present in said polypropylene copolymer (comonomer/(comonomer + propylene)) is at least 2.0 wt.%, and
(b) the temperature rising elution fractionation (TREF) curve of said propylene copolymer comprises at least two local maxima

(i) one absolute maximum over 100 °C, and
(ii) one relative maximum between 50 and 80 °C,

wherein said curve is obtained by temperature rising elution fractionation as defined in the example section.

**3.** A polypropylene copolymer according to claim 1, wherein the temperature rising elution fractionation (TREF) function of said propylene copolymer comprises at least two local maxima

(i) one absolute maximum over 100 °C, and
(ii) one relative maximum between 50 and 80 °C,

wherein said curve is obtained by temperature rising elution fractionation as defined in the example section.

**4.** A polypropylene copolymer according to claim 2, wherein

(a) a fraction having a lamella thickness of more than 9.0 nm,
(b) said fraction has a higher melt enthalpy [J/g] as each fraction with a lamella thickness below 9.0 nm,
(c) said fractions are determined by stepwise isothermal segregation technique (SIST) as defined in the example section.

**5.** A polypropylene copolymer according to any one of the preceding claims, wherein

(a) said propylene copolymer comprises a xylene soluble fraction (XS) of at least 2.0 wit.-%, wherein the xylene soluble fraction (XS) is determined as defined according to the example section, and

**6.** A polypropylene copolymer according to any one of the preceding claims, wherein said polypropylene copolymer has a melting temperature of at least 147 °C.

**7.** A polypropylene copolymer according to any one of the preceding claims, wherein

(a) the fraction having a lamella thickness of more than 9.0 nm has a melt enthalpy of more than 20 J/g and optionally of not more than 30 J/g,
and/or
(b) each fraction having a lamella thickness in the range of 6.5 to 9.0 nm has a melt enthalpy in the range of 15 to 30 J/g.

**8.** A polypropylene copolymer according to any one of the preceding claims, wherein

(a) the area below the absolute maximum of the temperature rising elution fractionation (TREF) function is in the range 50 to 85 wt.-%
and/or
(b) the area below the relative maximum between 50 and 80 °C of the temperature rising elution fractionation (TREF) curve is in the range 10 to 30 wt.-%
and/or
(c) the absolute maximum of the temperature rising elution fractionation (TREF) curve is in the range of over 100 to 110 °C.

**9.** A polypropylene copolymer according to any one of the preceding claims, wherein

(a) the total polypropylene copolymer has intrinsic viscosity measured according DIN ISO 1628/1 of at least 1.1 dl/g
and/or
(b) the intrinsic viscosity of the xylene soluble fraction of said polypropylene copolymer has intrinsic viscosity measured according DIN ISO 1628/1 of at least 0.4 dl/g.

**10.** Process for the preparation of a polypropylene copolymer according to any one of the preceding claims, wherein a catalyst system is used, said catalyst system comprises

(a) a procatalyst composition comprising

(i) a transition metal compound of Group 4 to 6 of the Periodic table (IUPAC, Nomenclature of Inorganic

Chemistry, 1989),
(ii) $MgCl_2$ and
(iii) an internal donor, wherein
(iv) said internal donor comprises an dialkylphthalate of formula (II)

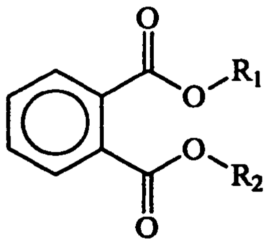

(II)

wherein $R_1$ and $R_2$ are independently a $C_1$ or $C_2$ alkyl

and
(b) an external donor having the formula IV

$$R'R''Si(OCH_2CH_3)_2 \quad (IV)$$

wherein
R' and R" are identical or different hydrocarbon residues.

**11.** Process according to claim 10, wherein the catalyst system does not comprise

(a) external donors having the formula (V)

$$R'R''Si(OCH_3)_2 \quad (V)$$

wherein
R' and R" are identical or different hydrocarbon residues, and/or
(b) external donors having the formula (VI)

$$R'''Si(OCH_2CH_3)_3 \quad (VI)$$

wherein
R'" is a hydrocarbon residue.

**12.** Process according to claim 10 or 11, wherein

(a) the external donor is selected from the group consisting of diisopropyldiethoxysilane (DIPDES), cyclohexylmethyldiethoxysilane (CHMDES) and dicyclopentadienyldiethoxysilane (DCPDES)
and/or
(b) the dialkylphthalate of formula (II) is a n-dialkylphthalate of formula (II).

**13.** Use of the donor ethoxy-substituted silane for the manufacture of a polypropylene copolymer, wherein the donor is selected from the group consisting of diisopropyldiethoxysilane (DIPDES), cyclohexylmethyldiethoxysilane (CHMDES) and dicyclopentadienyldiethoxysilane (DCPDES) and wherein further the polypropylene copolymer is a copolymer according to any one of the preceding claims 1 to 9.

**14.** Process for the preparation of the polypropylene copolymer according to any one of the preceding claims 1 to 9, wherein said polypropylene copolymer has been produced in the presence of a donor as defined in the claim 13.

**Patentansprüche**

1. Propylen-Copolymer, enthaltend Propylen-Monomereinheiten und wenigstens ein anderes α-Olefin als Comonomer, wobei

    (a) das Gewichtsverhältnis des Comonomers zur Summe an in dem Polypropylen-Copolymer enthaltenen Monomeren (Comonomer/(Comonomer + Propylen) wenigstens 2,0 Gew.-% beträgt,
    (b) das Polypropylen-Copolymer eine Fraktion enthält, die eine Lamellendicke von mehr als 9.0 nm aufweist,
    (c) die Fraktion mit einer Lammellendicke von mehr als 9.0 nm eine höhere Schmelzenthalpie [J/g] als jede Fraktion mit einer Lamellendicke unter 9.0 nm aufweist,
    (d) die Fraktionen durch wie im Beispielabschnitt definierte schrittweise isothermale Segregationstechnik (SIST) bestimmt werden.

2. Polypropylen-Copolymer, enthaltend Propylen-Monomereinheiten und wenigstens ein anderes α-Olefin als Comonomer, wobei

    (a) das Gewichtsverhältnis des Comonomers zur Summe an in dem Polypropylen-Copolymer enthaltenen Monomeren (Comonomer/(Comonomer + Propylen) wenigstens 2,0 Gew.-% beträgt,
    (b) die Kurve der temperaturansteigenden Eluierungsfraktionierung (TREF) des Polypropylen-Copolymers wenigstens zwei lokale Maxima enthält,

        (i) ein absolutes Maximum über 100 °C und
        (ii) ein relatives Maximum zwischen 50 und 80 °C,

    wobei die Kurve durch wie im Beispielabschnitt definierte temperaturansteigende Eluierungsfraktionierung erhalten wird.

3. Polypropylen-Copolymer nach Anspruch 1, bei dem die Funktion der temperaturansteigenden Eluierungsfraktionierung (TREF) des Polypropylen-Copolymers wenigstens zwei lokale Maxima enthält,

    (i) ein absolutes Maximum über 100 °C und
    (ii) ein relatives Maximum zwischen 50 und 80 °C,

    wobei die Kurve durch wie im Beispielabschnitt definierte temperaturansteigende Eluierungsfraktionierung erhalten wird.

4. Polypropylen-Copolymer nach Anspruch 2, bei dem

    (a) eine Fraktion eine Lamellendicke von mehr als 9.0 nm aufweist,
    (b) die Fraktion eine höhere Schmelzenthalpie [J/g] als jede Fraktion mit einer Lamellendicke unter 9.0 nm aufweist,
    (c) die Fraktionen durch wie im Beispielabschnitt definierte schrittweise isothermale Segregationstechnik (SIST) bestimmt werden.

5. Polypropylen-Copolymer nach einem der vorherigen Ansprüche, bei dem das Polypropylen-Copolymer eine Xylol-lösliche Fraktion (XS) von wenigstens 2,0 Gew.-% enthält, wobei die Xylol-lösliche Fraktion (XS) wie gemäß Beispielabschnitt definiert bestimmt wurde.

6. Polypropylen-Copolymer nach einem der vorherigen Ansprüche, bei dem das Polypropylen-Copolymer eine Schmelztemperatur von wenigstens 147 °C aufweist.

7. Polypropylen-Copolymer nach einem der vorherigen Ansprüche, bei dem

    (a) die eine Lamellendicke von mehr als 9.0 nm aufweisende Fraktion eine Schmelzenthalpie von mehr als 20 J/g und wahlweise von nicht mehr als 30 J/g aufweist,
    und/oder
    (b) jede eine Lamellendicke im Bereich von 6,5 bis 9,0 aufweisende Fraktion eine Schmelzenthalpie im Bereich von 15 bis 30 J/g aufweist.

**8.** Polypropylen-Copolymer nach einem der vorherigen Ansprüche, bei dem

(a) die Fläche unter dem absoluten Maximum der Funktion der temperaturansteigenden Eluierungsfraktionierung (TREF) im Bereich 50 bis 85 Gew.-% liegt,
und/oder
(b) die Fläche unter dem relativen Maximum zwischen 50 und 80 °C der Kurve der temperaturansteigenden Eluierungsfraktionierung (TREF) im Bereich 10 bis 30 Gew.-% liegt
und/oder
(c) das absolute Maximum der Kurve der temperaturansteigenden Eluierungsfraktionierung (TREF) im Bereich von über 100 bis 110 °C liegt.

**9.** Polypropylen-Copolymer nach einem der vorherigen Ansprüche, bei dem

(a) das gesamte Polypropylen-Copolymer eine nach DIN ISO 1628/1 gemessene intrisische Viskosität von wenigstens 1,1 dl/g aufweist,
und/oder
(b) die intrisische Viskosität der Xylol-löslichen Fraktion des Polypropylen-Copolymers eine nach DIN ISO 1628/1 gemessene intrisische Viskosität von wenigstens 0,4 dl/g ist.

**10.** Verfahren zur Herstellung eines Polypropylen-Copolymers nach einem der vorherigen Ansprüche, bei dem ein Katalysatorsystem verwendet wird, wobei das Katalysatorsystem enthält:

(a) eine Prokatalysatorzusammensetzung, enthaltend:

(i) eine Übergangsmetallverbindung der Gruppe 4 bis 6 des Periodensystems (IUPAC, Nomenklatur für Anorganische Chemie, 1989),
(ii) $MgCl_2$ und
(iii) einen internen Donor, wobei
(iv) der interne Donor ein Dialkylphthalat der Formel (II) umfasst,

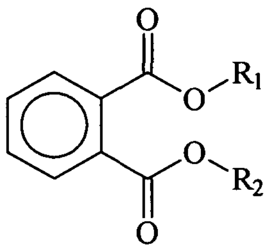

(II)

wobei $R_1$ und $R_2$ unabhängig ein $C_1$- oder $C_2$-Alkyl sind,

und
(b) einen externen Donor, der die Formel IV besitzt,

$R'R''Si(OCH_2CH_3)_2$ (IV)

wobei
R' und R" identische oder unterschiedliche Kohlenwasserstoffreste sind.

**11.** Verfahren nach Anspruch 10, bei dem das Katalysatorsystem nicht enthält:

(a) externe Donoren, die die Formel (V) besitzen,

$R'R''Si(OCH_3)_2$ (V)

wobei
R' und R" identische oder unterschiedliche Kohlenwasserstoffreste sind, und/oder

(b) externe Donoren, die die Formel (VI) besitzen,

$$R'''Si(OCH_2C_H3)_3 \qquad (VI)$$

wobei
R'" ein Kohlenwasserstoffrest ist.

**12.** Verfahren nach Anspruch 10 oder 11, bei dem

(a) der externe Donor aus der Gruppe ausgewählt ist, die aus Düsopropyldiethoxysilan (DIPDES), Cyclohexylmethyldiethoxysilan (CHMDES) und Dicylopentadienyldiethoxysilan (DCPDES) besteht,
und/oder
(b) das Dialkylphthalat der Formel (II) ein n-Dialkylphthalat der der Formel (II) ist.

**13.** Verwendung des Donors ethoxysubstituiertes Silan für die Herstellung eines Polypropylen-Copolymers, wobei der Donor aus der Gruppe ausgewählt ist, die aus Diisopropyldiethoxysilan (DIPDES), Cyclohexylmethyldiethoxysilan (CHMDES) und Dicylopentadienyldiethoxysilan (DCPDES) besteht, und wobei ferner das Polypropylen-Copolymer ein Polypropylen-Copolymers nach einem der Ansprüche 1 bis 9 ist.

**14.** Verfahren Herstellung des Polypropylen-Copolymers nach einem der Ansprüche 1 bis 9, bei dem das Polypropylen-Copolymer in der Gegenwart eines Donors wie in Anspruch 13 definiert hergestellt worden ist.

**Revendications**

**1.** Copolymère de propylène comprenant des motifs monomères de propylène et au moins une autre α-oléfine en tant que comonomère, dans lequel

(a) le rapport pondéral du comonomère à la somme des monomères présents dans ledit copolymère de polypropylène (comonomère/(comonomère + propylène) est d'au moins 2,0 % en poids,
(b) ledit copolymère de propylène comprend une fraction ayant une épaisseur lamellaire de plus de 9,0 nm,
(c) ladite fraction avec une épaisseur lamellaire de plus de 9,0 nm a une enthalpie à l'état fondu [J/g] supérieure par rapport à chaque fraction avec une épaisseur lamellaire de moins de 9,0 nm, et
(d) lesdites fractions sont déterminées par la technique de ségrégation isotherme par étapes (SIST) comme le définit la section Exemples.

**2.** Copolymère de polypropylène comprenant des motifs monomères de propylène et au moins une autre α-oléfine en tant que comonomère, dans lequel

(a) le rapport pondéral du comonomère à la somme des monomères présents dans ledit copolymère de polypropylène (comonomère/(comonomère + propylène) est d'au moins 2,0 % en poids, et
(b) la courbe de fractionnement par température croissante d'élution (TREF) dudit copolymère de propylène comprend au moins deux valeurs maximales locales

(i) un maximum absolu supérieur à 100°C, et
(ii) un maximum relatif entre 50 et 80°C,

dans lequel ladite courbe est obtenue par fractionnement par température croissante d'élution comme le définit la section Exemples.

**3.** Copolymère de polypropylène selon la revendication 1, dans lequel la fonction de fractionnement par température croissante d'élution (TREF) dudit copolymère de propylène comprend au moins deux valeurs maximales locales

(i) un maximum absolu supérieur à 100°C, et
(ii) un maximum relatif entre 50 et 80°C,

dans lequel ladite courbe est obtenue par fractionnement par température croissante d'élution comme le définit la section Exemples.

**4.** Copolymère de polypropylène selon la revendication 2, dans lequel

(a) une fraction a une épaisseur lamellaire de plus de 9,0 nm,
(b) ladite fraction a une enthalpie à l'état fondu [J/g] supérieure par rapport à chaque fraction avec une épaisseur lamellaire de moins de 9,0 nm,
(c) lesdites fractions sont déterminées par la technique de ségrégation isotherme par étapes (SIST) comme le définit la section Exemples.

**5.** Copolymère de polypropylène selon l'une quelconque des revendications précédentes, dans lequel ledit copolymère de propylène comprend une fraction soluble dans le xylène (XS) d'au moins 2,0 % en poids, dans lequel la fraction soluble dans le xylène (XS) est déterminée comme le définit la section Exemples.

**6.** Copolymère de polypropylène selon l'une quelconque des revendications précédentes, dans lequel ledit copolymère de polypropylène a une température de fusion d'au moins 147°C.

**7.** Copolymère de polypropylène selon l'une quelconque des revendications précédentes, dans lequel

(a) la fraction ayant une épaisseur lamellaire de plus de 9,0 nm a une enthalpie à l'état fondu de plus de 20 J/g et facultativement ne dépassant pas 30 J/g,
et/ou
(b) chaque fraction ayant une épaisseur lamellaire dans la plage de 6,5 à 9,0 nm a une enthalpie à l'état fondu dans la plage de 15 à 30 J/g.

**8.** Copolymère de polypropylène selon l'une quelconque des revendications précédentes, dans lequel

(a) l'aire sous le maximum absolu de la courbe de fractionnement par température croissante d'élution (TREF) se situe dans la plage de 50 à 85 % en poids
et/ou
(b) l'aire sous le maximum relatif entre 50 et 80°C de la courbe de fractionnement par température croissante d'élution (TREF) se situe dans la plage de 10 à 30 % en poids
et/ou
(c) le maximum absolu de la courbe de fractionnement par température croissante d'élution (TREF) se situe dans la plage de plus de 100 à 110°C.

**9.** Copolymère de polypropylène selon l'une quelconque des revendications précédentes, dans lequel

(a) le copolymère de polypropylène total a une viscosité intrinsèque mesurée selon la norme ISO DIN 1628/1 d'au moins 1,1 dl/g et/ou
(b) la viscosité intrinsèque de la fraction soluble dans le xylène dudit copolymère de polypropylène a une viscosité intrinsèque mesurée selon la norme ISO DIN 1628/1 d'au moins 0,4 dl/g.

**10.** Procédé pour la préparation d'un copolymère de polypropylène selon l'une quelconque des revendications précédentes, dans lequel un système de catalyseur est utilisé, ledit système de catalyseur incluant

(a) une composition de procatalyseur comprenant

(i) un composé de métal de transition du groupe 4 à 6 du tableau périodique (IUPAC, nomenclature en chimie inorganique, 1989),
(ii) $MgCl_2$ et
(iii) un donneur interne, dans lequel
(iv) ledit donneur interne comprend un dialkylphtalate de formule (II)

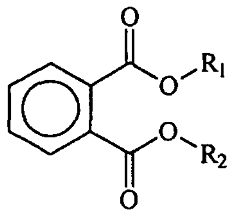

(II)

dans laquelle $R_1$ et $R_2$ sont indépendamment un alkyle en $C_1$ ou $C_2$

et

(b) un donneur externe ayant la formule IV

$$R'R''Si(OCH_2CH_3)_2 \quad (IV)$$

dans laquelle

R' et R" sont des résidus hydrocarbonés identiques ou différents.

**11.** Procédé selon la revendication 10, dans lequel le système de catalyseur ne comprend pas

(a) de donneurs externes ayant la formule (V)

$$R'R''Si(OCH_3)_2 \quad (V)$$

dans laquelle

R' et R" sont des résidus hydrocarbonés identiques ou différents, et/ou

(b) de donneurs externes ayant la formule (VI)

$$R'''Si(OCH_2CH_3)_3 \quad (VI)$$

dans laquelle

R"' est un résidu hydrocarboné.

**12.** Procédé selon la revendication 10 ou 11, dans lequel

(a) le donneur externe est sélectionné dans le groupe constitué par le diisopropyldiéthoxysilane (DIPDES), le cyclohexylméthyldiéthoxysilane (CHMDES) et le dicyclopentadiényldiéthoxysilane (DCPDES)

et/ou

(b) le dialkylphtalate de formule (II) est un n-dialkylphtalate de formule (II).

**13.** Utilisation du donneur silane à substitution éthoxy pour la préparation d'un copolymère de polypropylène, dans laquelle le donneur est sélectionné dans le groupe constitué par le diisopropyldiéthoxysilane (DIPDES), le cyclohexylméthyldiéthoxysilane (CHMDES) et le dicyclopentadiényldiéthoxysilane (DCPDES) et dans laquelle en outre le copolymère de polypropylène est un copolymère selon l'une quelconque des revendications précédentes 1 à 9.

**14.** Procédé pour la préparation du copolymère de polypropylène selon l'une quelconque des revendications précédentes 1 à 9, dans lequel ledit copolymère de polypropylène a été produit en présence d'un donneur comme le définit la revendication 13.

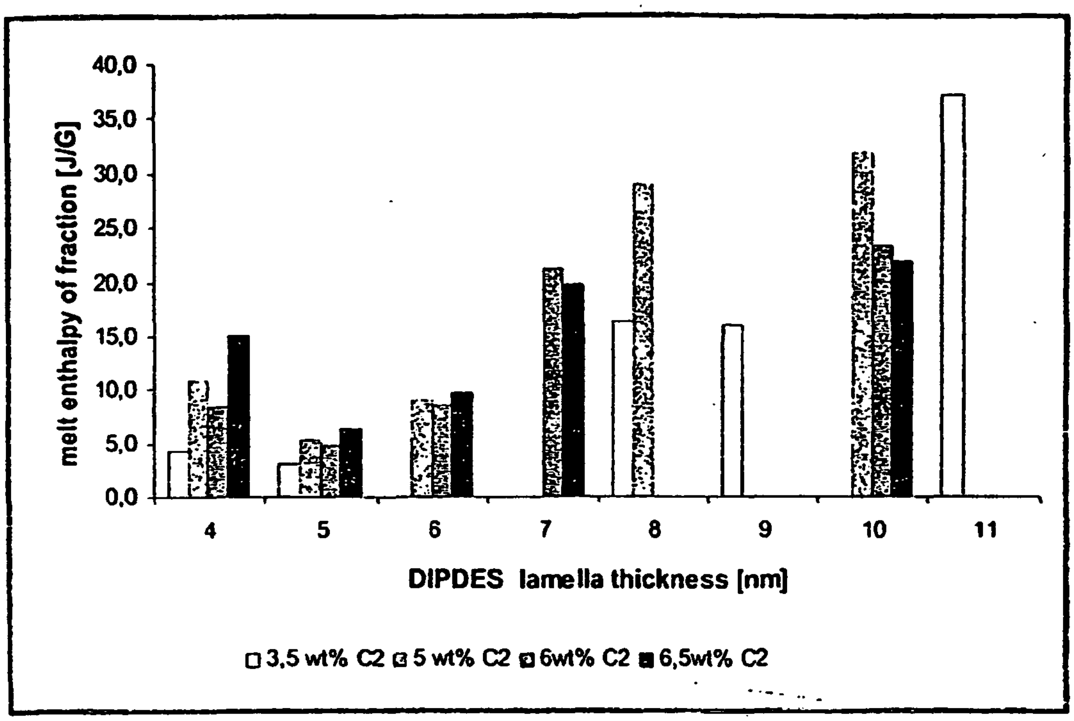


**Figure 1:** Lamella thickness distribution for samples obtained with donor DIPDES at MFR ~10 g/10min and different C2 contents

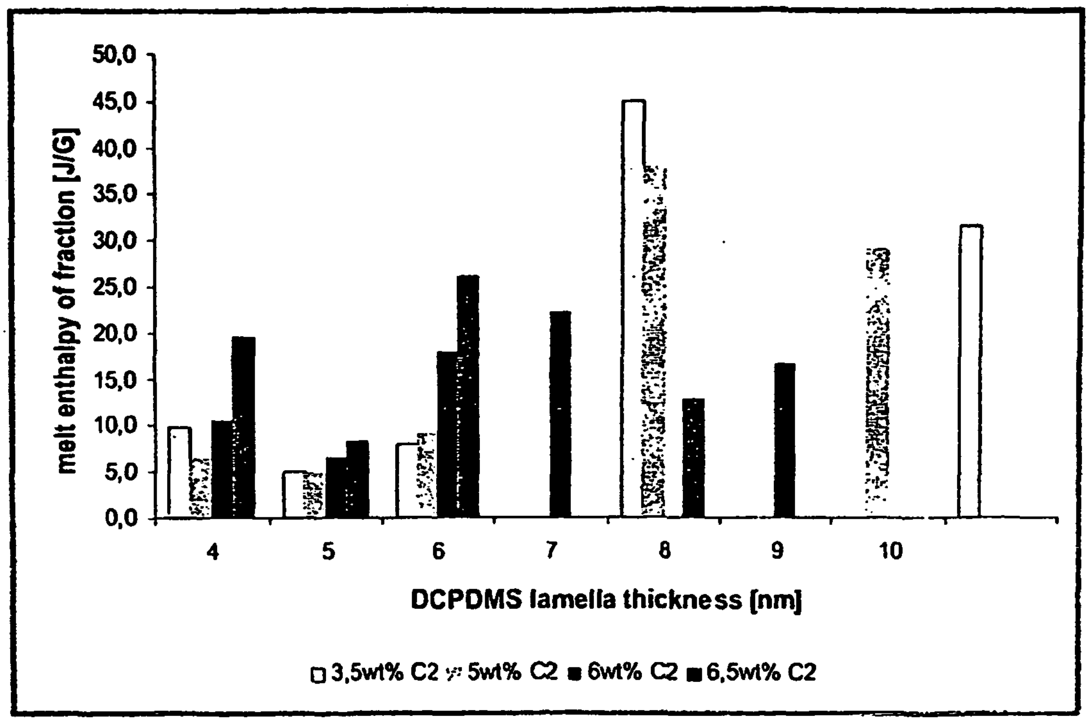


**Figure 2:** Lamella thickness distribution for samples obtained with donor DCPDMS at MFR ~10 g/10min and different C2 contents

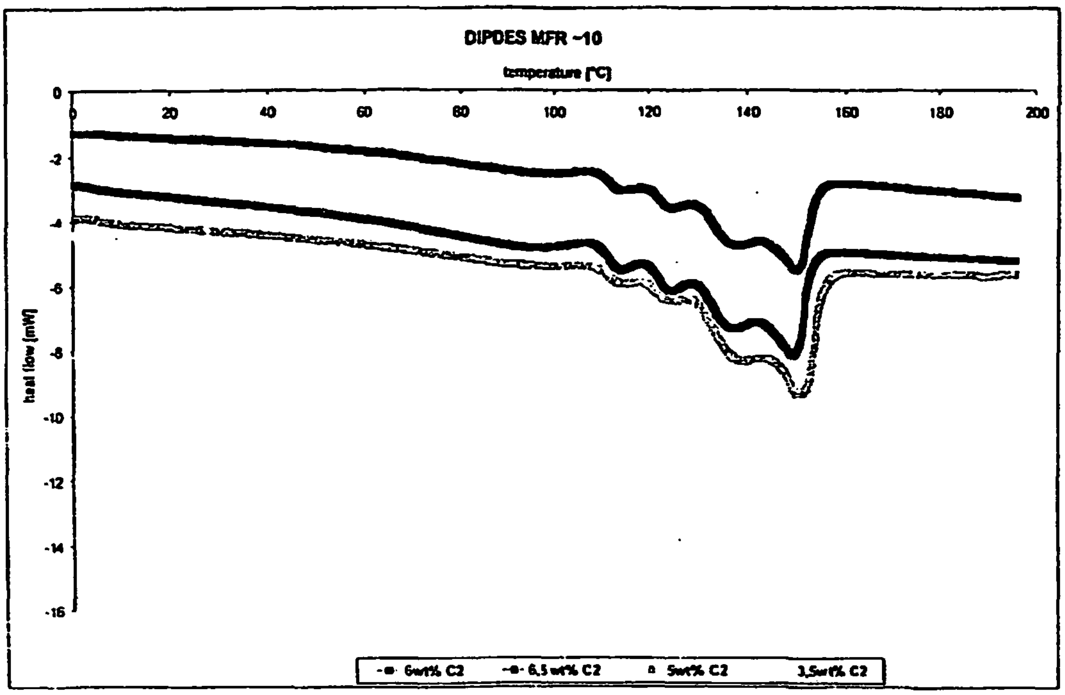


**Figure 3:** DSC traces obtained by SIST for samples produced with donor DIPDES at MFR ~10 g/10min and different C2 contents

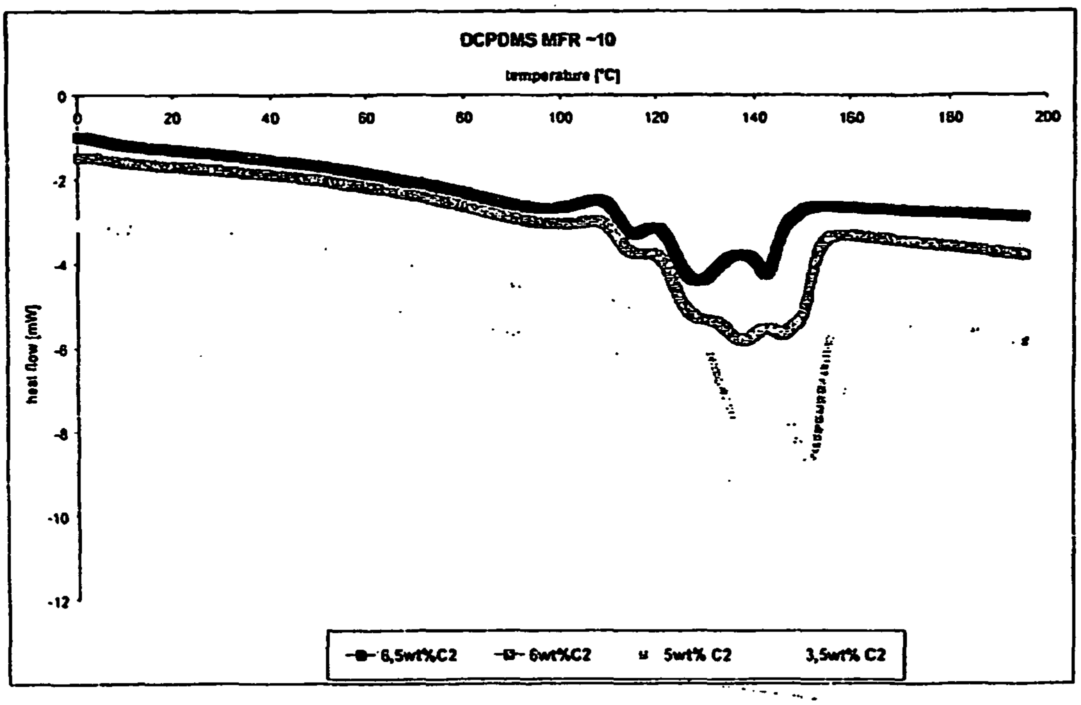


Figure 4: DSC traces obtained by SIST for samples produced with donor DCPDMS at MFR ~10 g/10min and different C2 contents

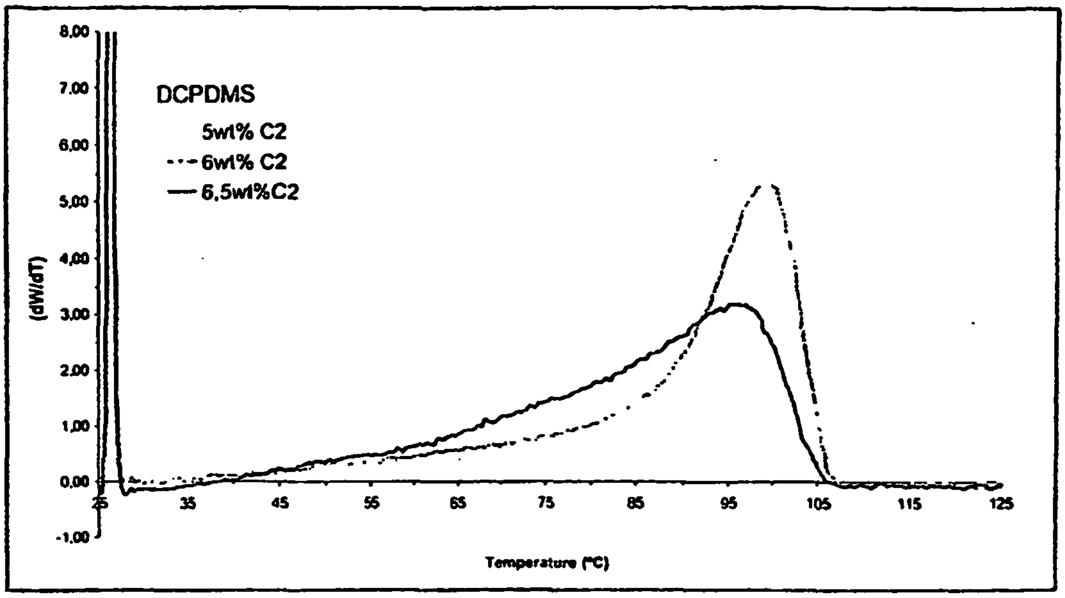


**Figure 5:** TREF curves obtained for samples produced with donor DCPDMS at MFR ~10 g/min and different C2 contents

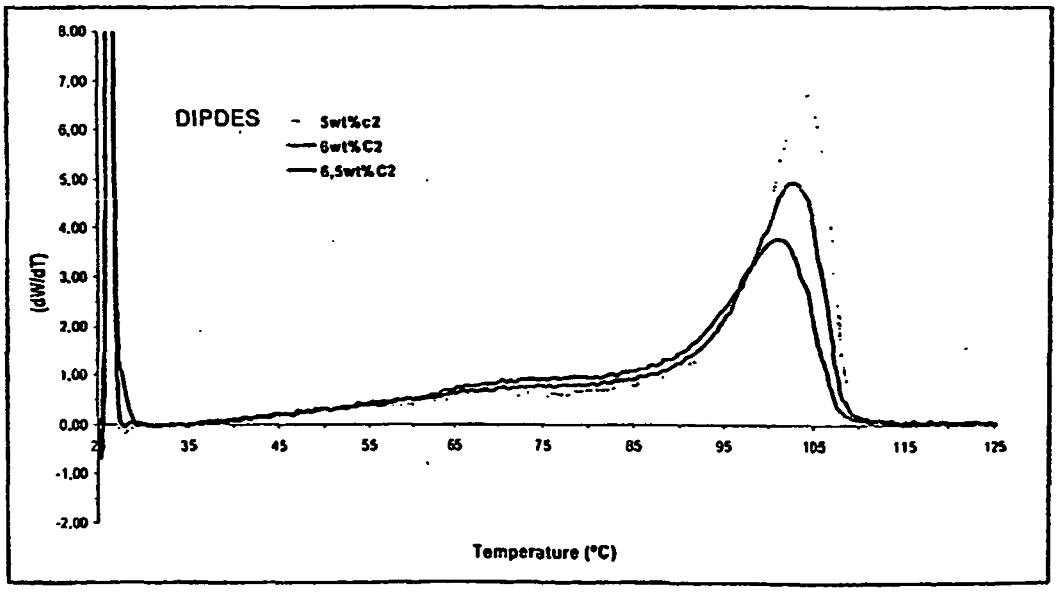


**Figure 6:** TREF curves obtained for samples produced with donor DIPDES at MFR ~10 g/min and different C2 contents

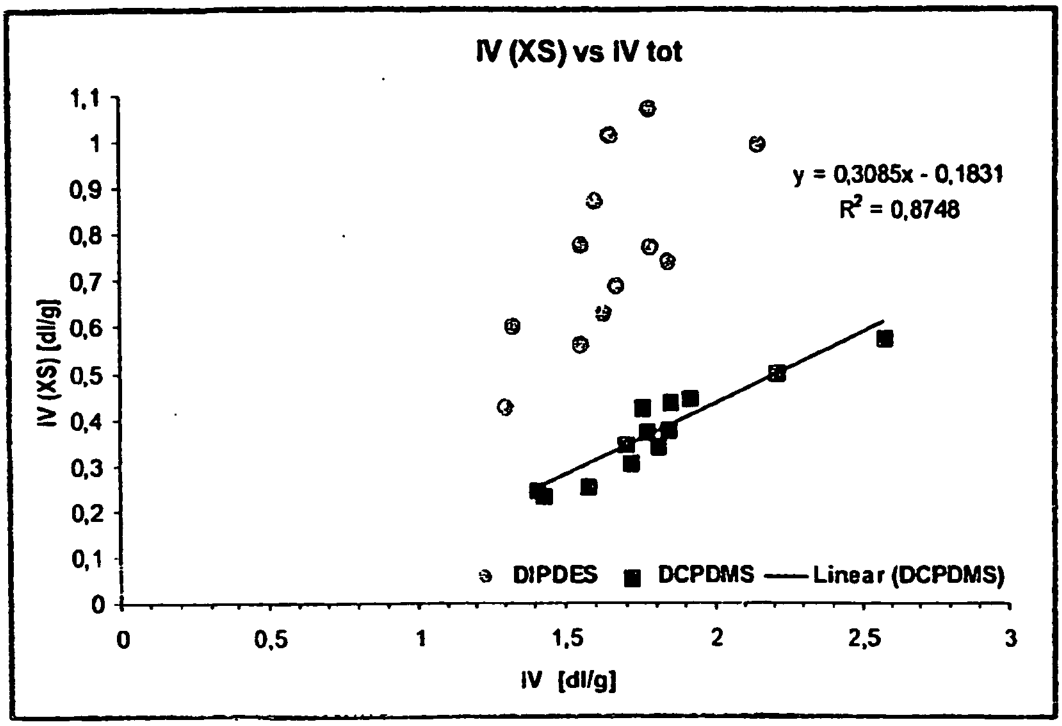


**Figure 7:** Intrinsic viscosity of the xylene cold soluble fraction vesrus intrinsic viscosity of the original material

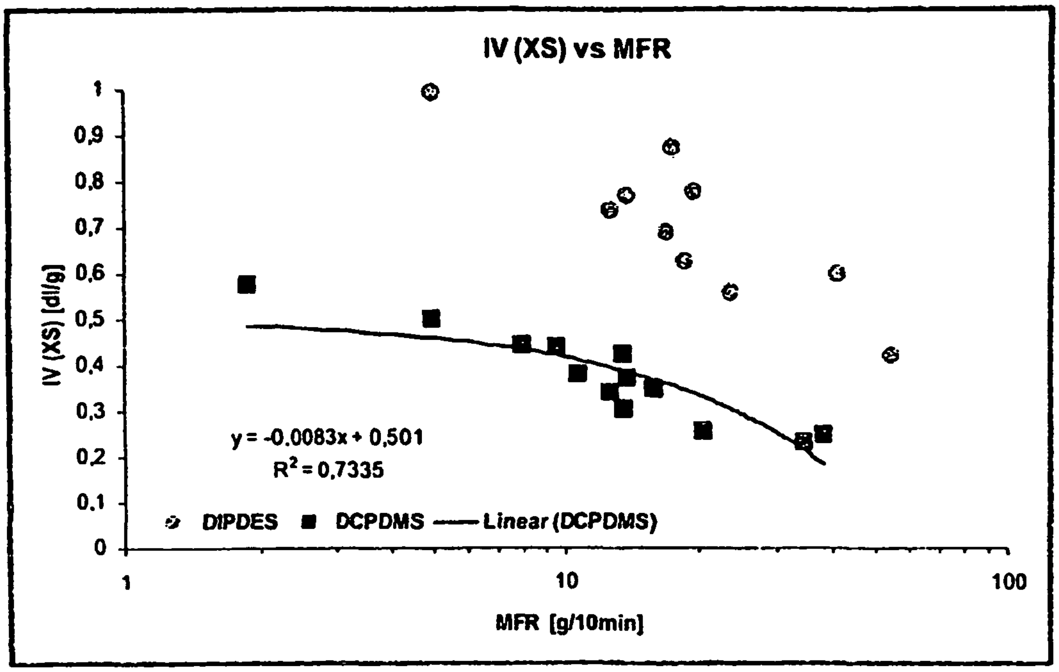


Figure 8: Intrinsic viscosity of the xylene cold soluble fraction vesrus MFR of the original material

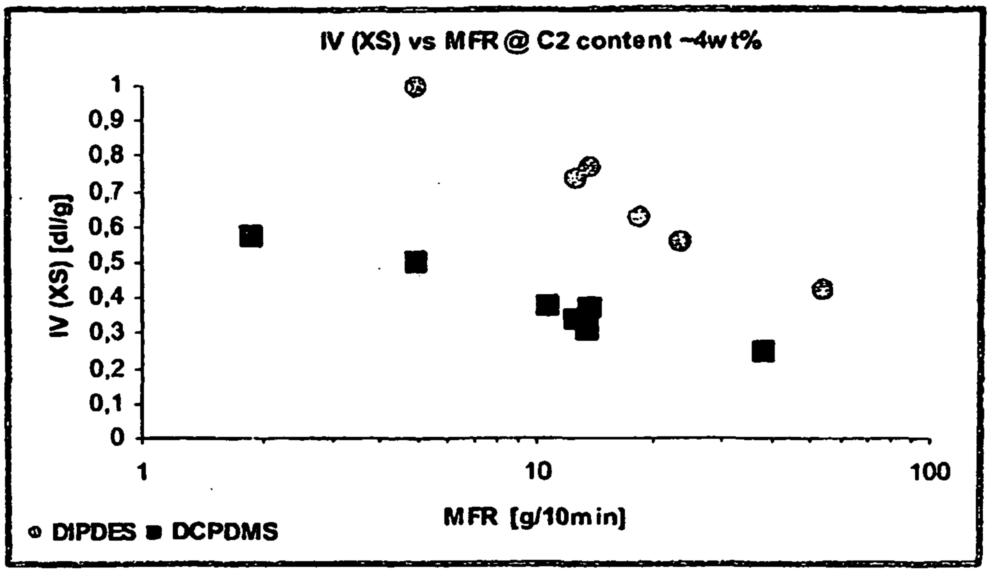


Figure 9: Intrinsic viscosity of the xylene cold soluble fraction vesrus MFR of the original material for samples containing ~ 4 wt.-% C2

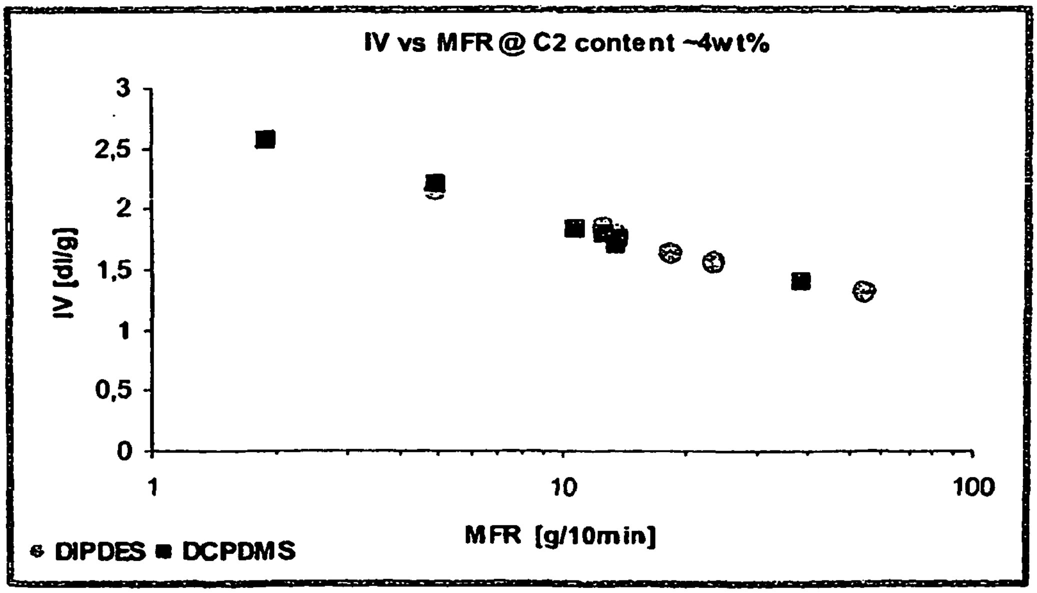


Figure 10: Intrinsic viscosity versus MFR of the original material for samples containing ~ 4 wt.-% C2

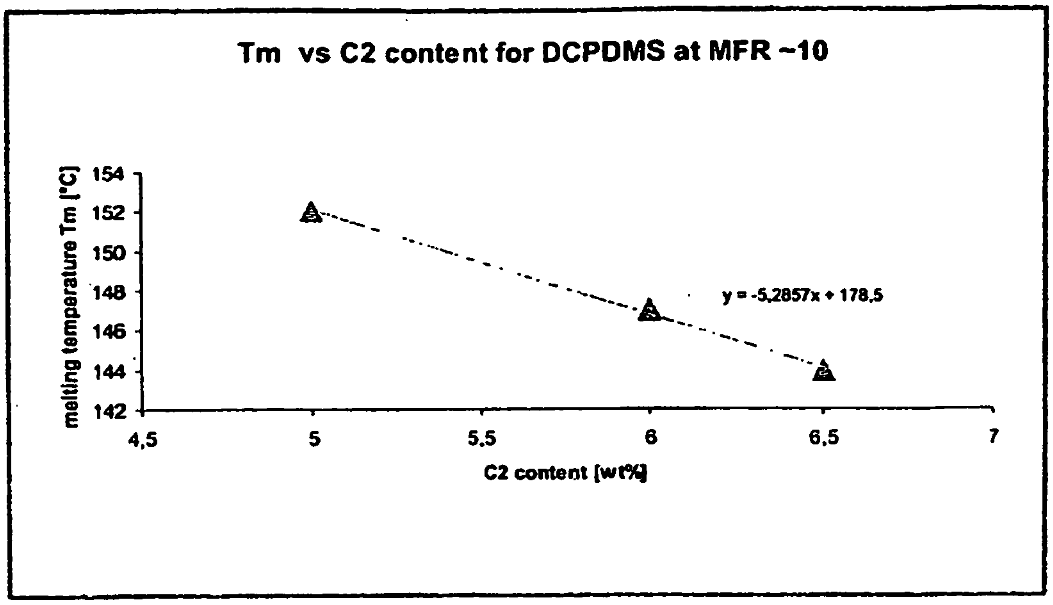


Figure 11: Melting temperature as a function of C2 content for samples having a MFR~10g/10min and obtained with donor DCPDMS

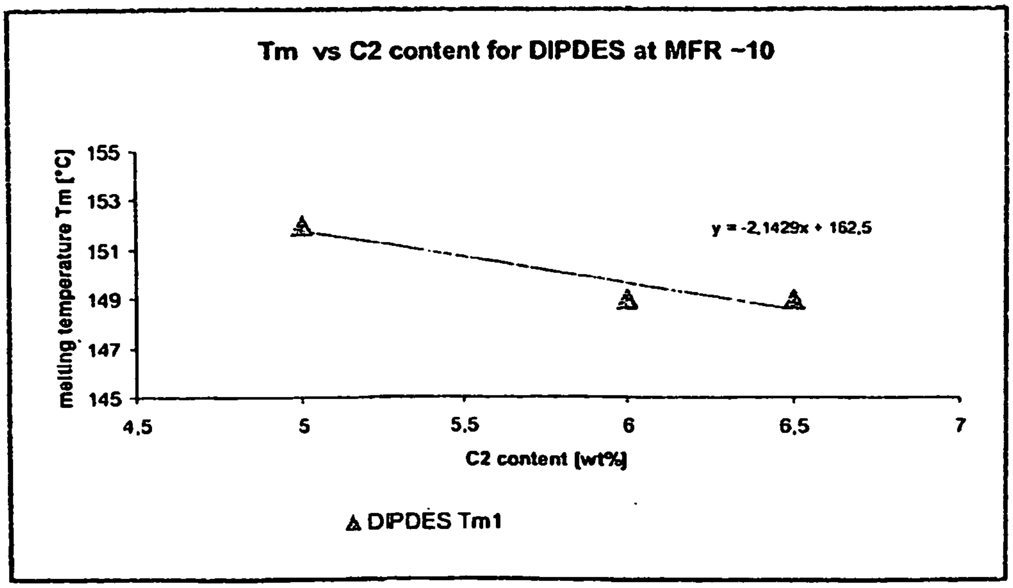


Figure 12: Melting temperature as a function of C2 content for samples having a MFR ~10g/10min and obtained with donor DIPDES

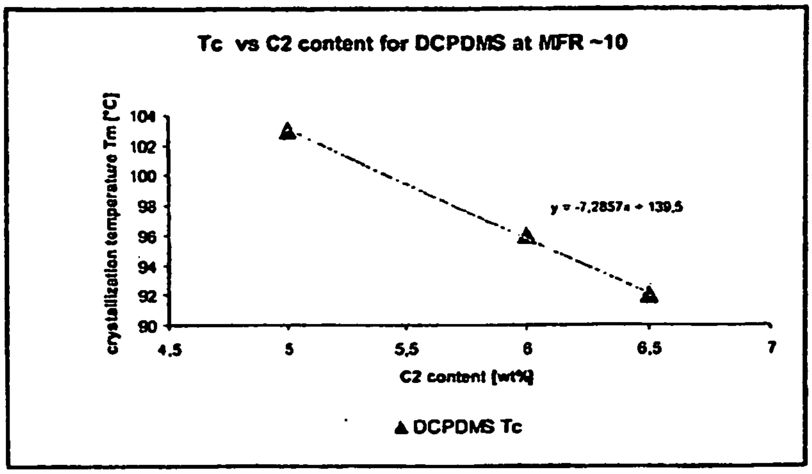


**Figure 13:** Crystallization temperature as a function of C2 content for samples having a MFR ~10g/10min and obtained with donor DCPDMS

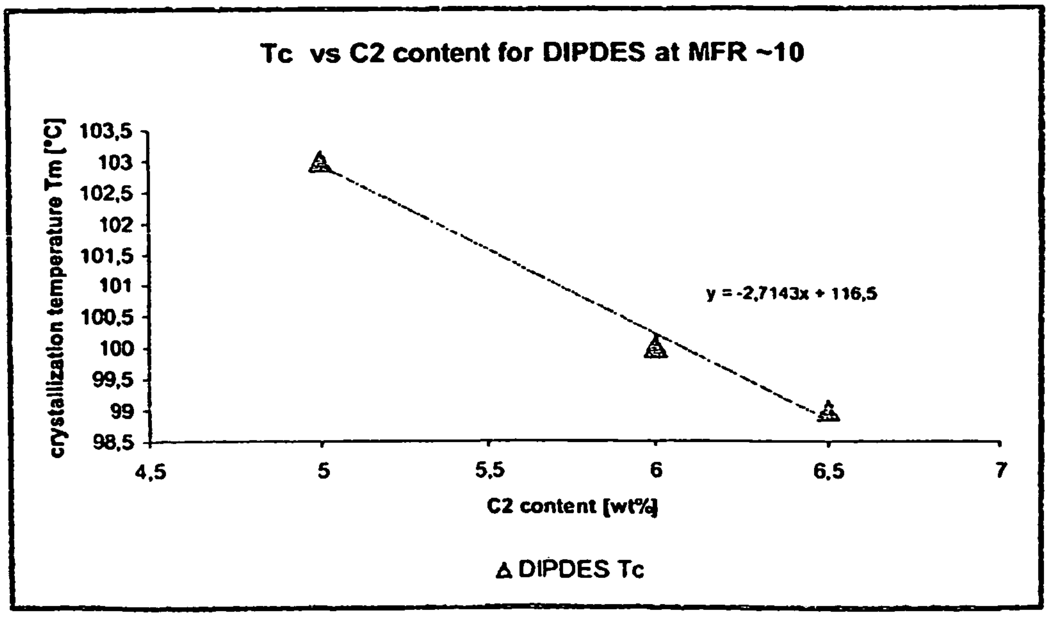


**Figure 14:** Crystallization temperature as a function of C2 content for samples having MFR ~10g/10min and obtained with donor DIPDES

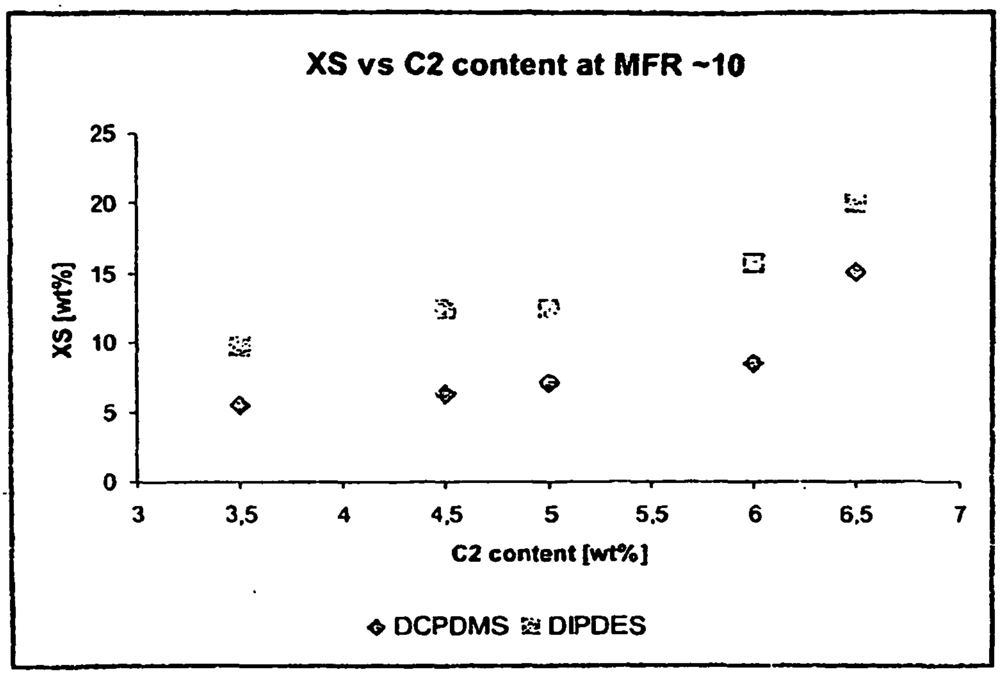


**Figure 15:** Amount of xylene solubles as a function of C2 content for samples obtained with donor DIPDES and DCPDMS having a MFR~10g/10min

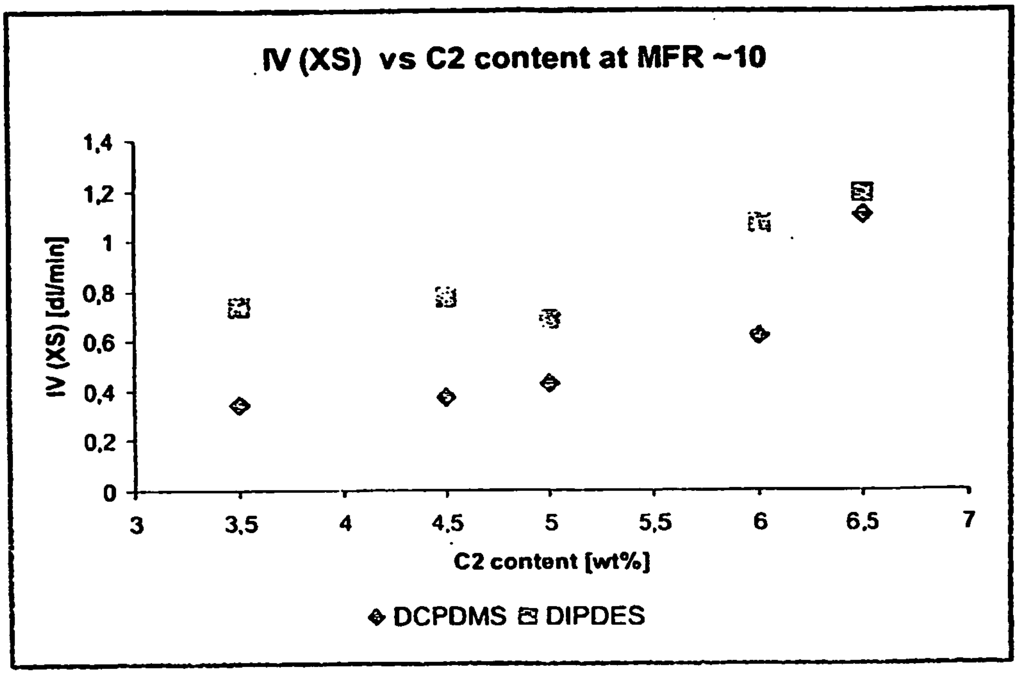


**Figure 16:** Intrinsic viscosity of the xylene soluble fraction as a function of C2 content for samples obtained with donor DIPDES and DCPDMS having a MFR ~10g/10min

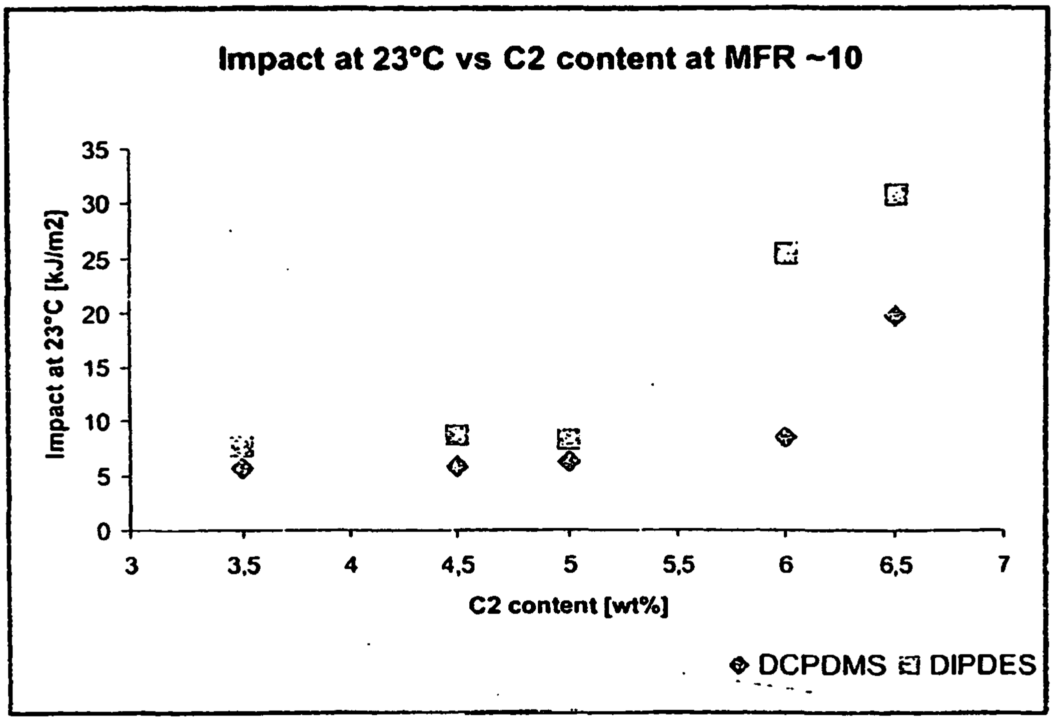


Figure 17: NIS as a function of C2 content for samples obtained with donor DIPDES and DCPDMS having a MFR ~10 g/10min

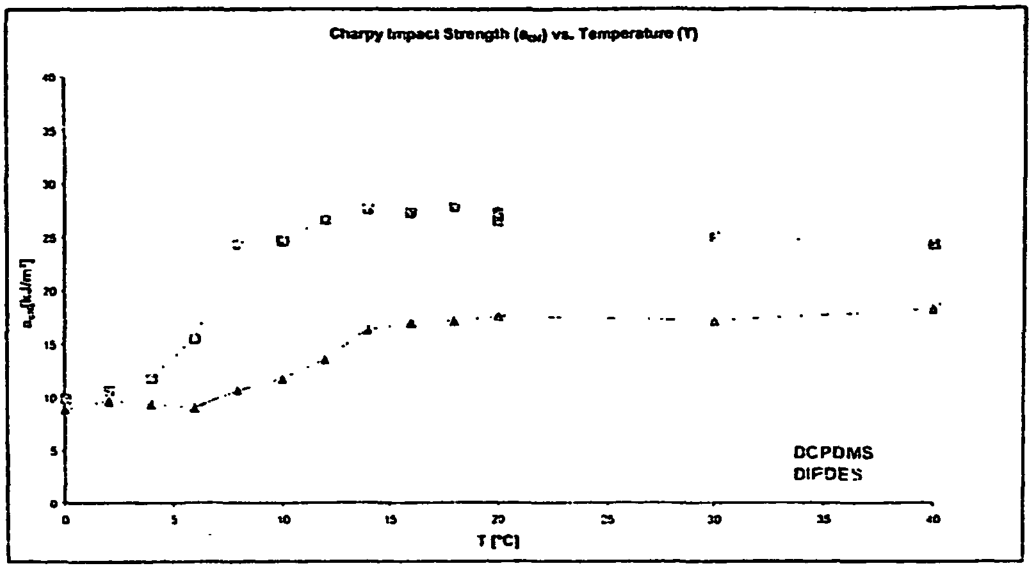


**Figure 18:** NIS as a function of temperature for samples having a MFR ~10 g/10min and C2 content of 6.5 wt.-% obtained with donor DIPDES and DCPDMS

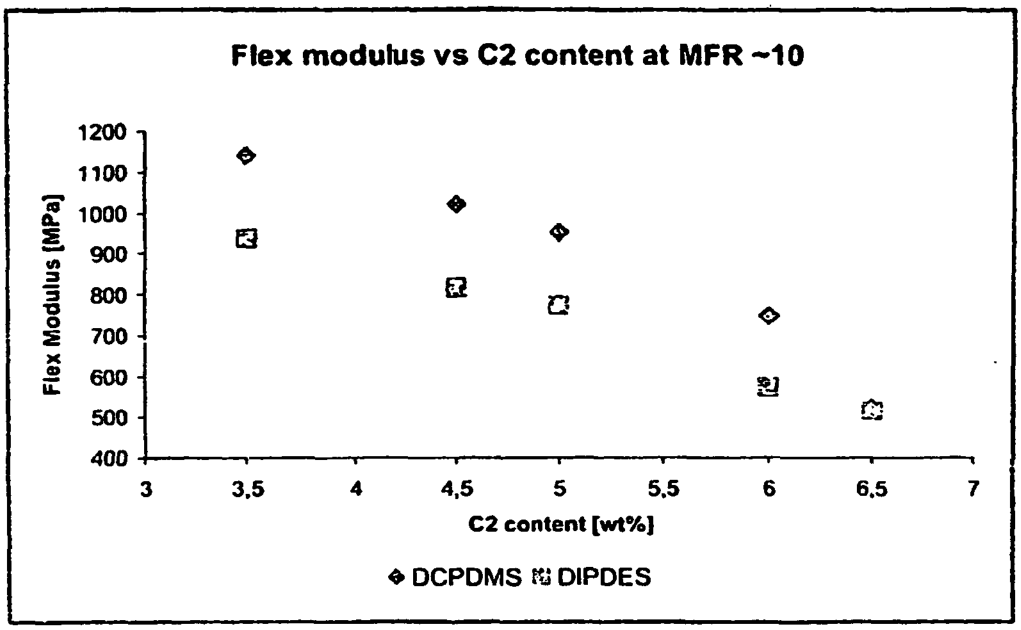


Figure 19: Flexural modulus as a function of C2 content for samples obtained with donor DIPDES and DCPDMS having a MFR ~10 g/10min

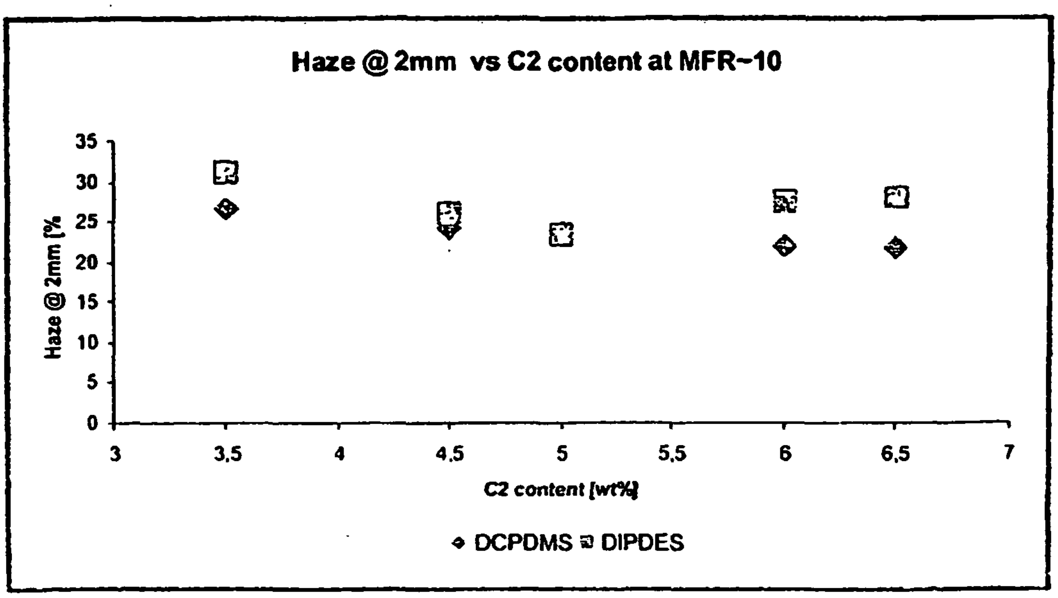


**Figure 20:** Haze as a function of C2 content for samples obtained with donor DIPDES and DCPDMS having a MFR ~10 g/10min

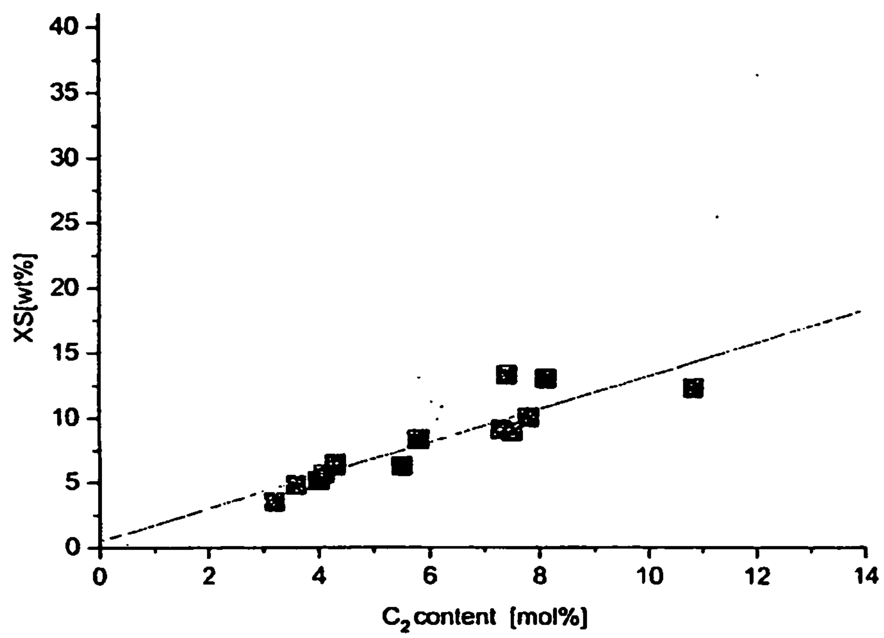


**Figure 21:** Xylene soluble fraction [wt%] as a function of ethylene content in the polymer for copolymers produced with ethoxysilane donors (light gray) and methoxysilane donors (dark gray)

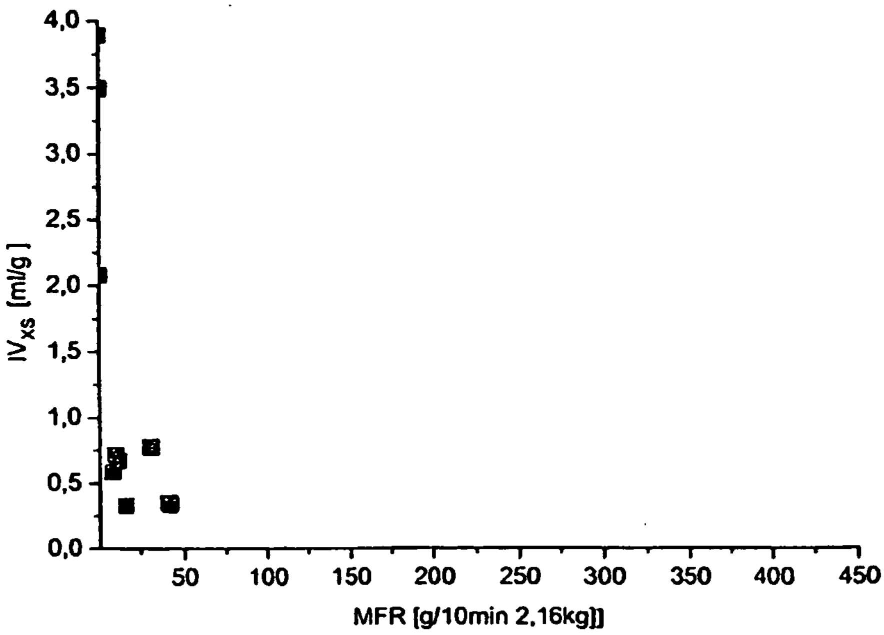


**Figure 22:** Intrinsic viscosity of the xylene soluble fraction [ml/g] as a function of MFR [g/10min 2,16kg] for copolymers produced with ethoxysilane donors (light gray) and methoxysilane donors (dark gray)

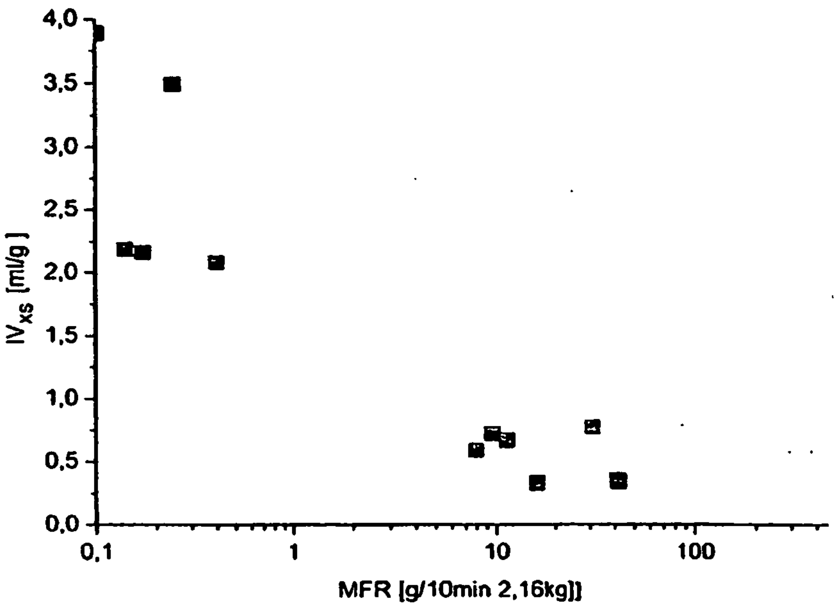


**Figure 23:** Intrinsic viscosity of the xylene soluble fraction [ml/g] as a function of MFR [g/10min 2,16kg] for copolymers produced with ethoxysilane donors (light gray) and methoxysilane donors (dark gray)

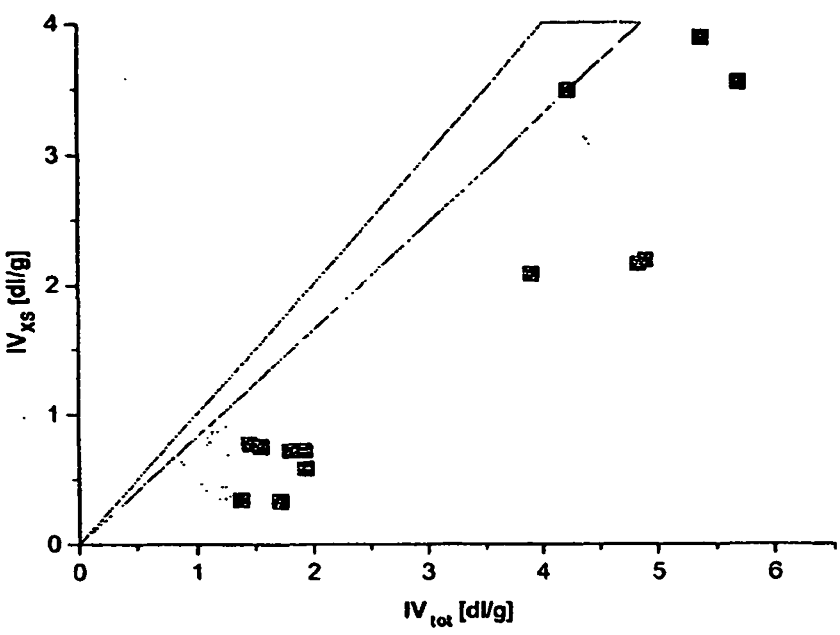


**Figure 24:** Intrinsic viscosity of the xylene soluble fraction [ml/g] as a function of intrinsic viscosity of the total polymer [ml/g] for copolymers produced with ethoxysilane donors (light gray) and methoxysilane donors (dark gray)

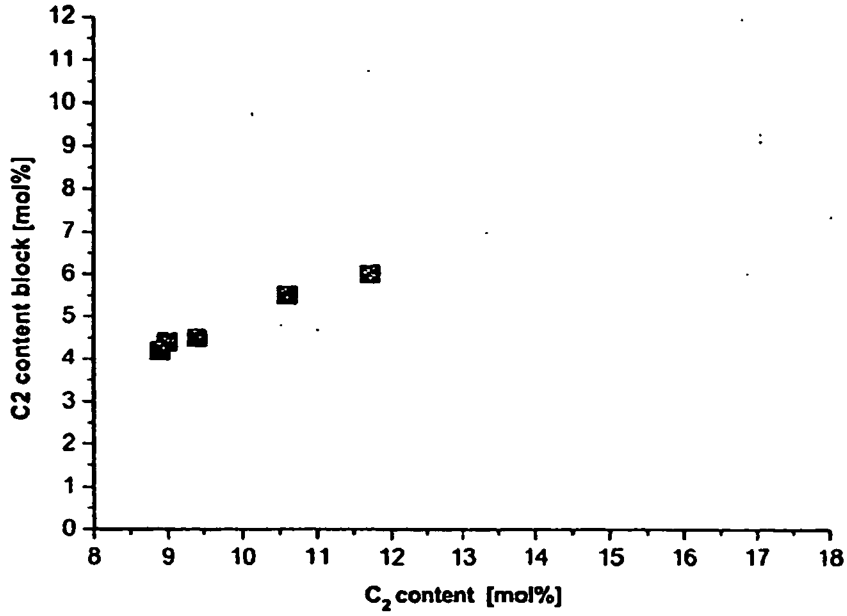


Figure 25: Inserted blocky ethylen [mol%] as a function of total Ethylene content [mol%] copolymers produced with ethoxysilane (light gray) and methoxysilane donors (dark gray)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 92196351 A **[0116] [0125] [0128]**
- FI 88047 **[0116] [0125] [0128]**
- WO 9219658 A **[0116] [0125] [0128]**
- FI 88048 **[0116] [0125] [0128]**
- EP 0491566 A2 **[0116] [0125] [0128]**
- FI 86886 **[0116] [0125] [0128]**
- DE 3821483 A1 **[0187] [0190] [0193]**


### Non-patent literature cited in the description


- **P. VILLE et al.** *Polymer,* 2001, vol. 42, 1953-1967 **[0019] [0035] [0065] [0084]**
- **IUPAC.** *Nomenclature of Inorganic Chemistry,* 1989 **[0111]**
- *Nomenclature of Inorganic Chemistry,* 1989 **[0113]**
- **J.B.P. SOARES ; A.E. HAMIELEC.** Temperature rising elution fractionation of linear polyolefins. *Polymer,* 1995, vol. 36 (8), 1639-1654 **[0184]**
- Fractionation. **SOARES, J.B.P.** Encyclopedia Of Polymer Science and Technology. John Wiley & Sons, 2001, vol. 10, 75-131 **[0184]**
- **N. AUST ; M. GAHLEITNER ; K. REICHELT ; B. RANINGER.** Optimization of run parameters of temperature-rising elution fractionation with the aid of a factorial design experiment. *Polymer Testing,* 2006, vol. 25 (7), 896-903 **[0184]**